(19) **Europäisches Patentamt / European Patent Office / Office européen des brevets**

(11) **EP 4 094 463 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **21700941.4**

(22) Anmeldetag: **19.01.2021**

(51) Internationale Patentklassifikation (IPC):
**H04W 12/00** (2021.01)    **G01S 5/02** (2010.01)

(52) Gemeinsame Patentklassifikation (CPC):
**H04W 12/009; G01S 5/02213; G01S 5/0295;**
G06K 7/10306; H04W 4/80

(86) Internationale Anmeldenummer:
**PCT/EP2021/051073**

(87) Internationale Veröffentlichungsnummer:
**WO 2021/148408 (29.07.2021 Gazette 2021/30)**

(54) **DETEKTIEREN EINER ANWESENHEIT EINES UNBEKANNTEN UWB-TOKENS**

DETECTING A PRESENCE OF AN UNKNOWN UWB TOKEN

DÉTECTION D'UNE PRÉSENCE D'UN JETON UWB INCONNU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2020 DE 102020101734**

(43) Veröffentlichungstag der Anmeldung:
**30.11.2022 Patentblatt 2022/48**

(73) Patentinhaber: **Bundesdruckerei GmbH**
**10969 Berlin (DE)**

(72) Erfinder:
- **DRESSEL, Olaf**
  **14641 Wustermark (DE)**
- **KOMAROV, Ilya**
  **13507 Berlin (DE)**

(74) Vertreter: **Richardt Patentanwälte PartG mbB**
**Wilhelmstraße 7**
**65185 Wiesbaden (DE)**

(56) Entgegenhaltungen:
EP-A1- 3 471 068      WO-A1-2013/166096
WO-A1-2014/009981      US-A1- 2006 291 537
US-A1- 2014 277 837      US-A1- 2016 349 362

**Beschreibung**

Die Erfindung betrifft ein UWB-Überwachungssystem sowie ein Verfahren zum Steuern eines UWB-Überwachungssystems.

Überwachungssystem bedienen sich moderner Sensorik zum Erfassen detaillierter, vielfältiger und umfangreicher Daten zu Überwachungszwecken, beispielsweise von räumlichen Bereichen. Für eine Überwachung von Zugängen zu Gebäuden werden elektronische Hilfsmittel, wie beispielsweise Zugangskarten bzw. Schlüsselkarten verwendet. Anhand der Verwendung solcher Zugangskarten bzw. Schlüsselkarten kann beispielsweise kontaktlos überwacht werden, wer wann das Gebäude betritt oder verlässt. Dies setzt jedoch voraus, dass das es sich bei der entsprechenden Zugangskarten bzw.

Schlüsselkarten dem Überwachungssystem bekannt ist und einen mit dem Überwachungssystem kompatiblen Kommunikationskanal zur Datenübertragung verwendet. Ist dies nicht der Fall, kann das Überwachungssystem die Zugangskarten bzw. Schlüsselkarten nicht detektieren.

WO 2014/009981 A1 beschreibt ein UWB-Echtzeitlokalisierungssystem, in welchem UWB-Lesegeräte synchronisiert werden, indem eine Uhr eines UWB-Slave-Lesegeräts eingestellt wird, bis das UWB-Lesegerät jeden UWB-Impuls einer Folge von UWB-Impulsen empfängt, die eine vorbestimmte Impulsperiode aufweist und eine eindeutige Kennung des Master-UWB-Lesegeräts in einem erwarteten Zeitfenster innerhalb jeder vorbestimmten Impulsperiode kodiert, wobei das erwartete Zeitfenster mit einer Entfernung zwischen dem UWB-Tag-Lesegerät und einem Master-UWB-Lesegerät in Beziehung steht.

US 2006/291537 A1 beschreibt ein Übertragen einer Zeit von einem Ultrabreitband-(UWB)-Sender zu einem UWB-Empfänger, indem eine Signalstruktur mit einem zugeordneten Zeitbezugspunkt zusammen mit einem Zeitwert für den Zeitbezugspunkt übertragen wird. Der UWB-Empfänger empfängt die Zeitsignalstruktur durch Synchronisieren einer Empfängerzeitbasis mit der Signalstruktur, Demodulieren der Zeitwertinformationen und Verwenden der demodulierten Zeitwertinformationen zum Einstellen eines Empfängeruhrwerts. Ausbreitungsverzögerungsinformationen werden verwendet, um den Empfängeruhrwert einzustellen, indem der Empfängeruhrwert erhöht wird, um die Ausbreitungsverzögerung zu berücksichtigen. Die Ausbreitungsverzögerung wird aus einer bekannten Entfernung zwischen dem Sender und dem Empfänger bestimmt oder der Sender und der Empfänger sind Teil einer Zwei-Wege-Verbindung, wobei die Ausbreitungsverzögerung durch Round-Trip-Timing-Messungen gemessen wird.

US 2016/349362 A1 beschreibt eine mobile Lokalisierung eines Objekts mit einem Referenzrahmen der Objektposition unter Verwendung spärlicher Flugzeitdaten und Koppelnavigation, welche erreicht wird durch Erzeugen eines lokalen Referenzrahmens der Koppelnavigation, einschließlich einer Schätzung der Objektposition in Bezug auf bekannte Orte von einem oder mehr Ultraweitband-Transceiver. Während sich das Objekt entlang seines Weges bewegt, wird eine Bestimmung unter Verwendung des Koppelnavigations-Lokalreferenzrahmens durchgeführt. Wenn sich das Objekt innerhalb einer vorbestimmten Reichweite von einem oder mehreren der Ultraweitband-Transceiver befindet, wird eine "Konversation" initiiert und Entfernungsdaten zwischen dem Objekt und dem/den UWB-Sendeempfänger(n) gesammelt. Das System verwendet mehrere Konversationen, um genaue Entfernungs- und Peilungsinformationen zu ermitteln, und aktualisiert die Position des Objekts basierend auf den gesammelten Daten.

US 2014/277837 A1 beschreibt eine mobile Vorrichtung, die es einem oder mehreren Prozessoren ermöglicht, Fahrzeugschlüssel-Sicherheitscodes von einem Fahrzeugschlüssel zu empfangen. Die mobile Vorrichtung empfängt ein Signal von einem Sender, der einem Fahrzeugschlüssel zugeordnet ist, wobei das Signal einen oder mehrere Sicherheitscodes angibt, die dem Fahrzeugschlüssel zugeordnet sind. Die mobile Vorrichtung speichert den einen oder die mehreren Sicherheitscodes in einem Speicher und konfiguriert eine mobile Vorrichtungsanwendung, um eine oder mehrere Fahrzeugsteuerfunktionen unter Verwendung der Sicherheitscodes zu implementieren. Die mobile Vorrichtung überträgt Befehle zum Implementieren der einen oder mehreren Fahrzeugsteuerfunktionen unter Verwendung der Sicherheitscodes drahtlos an ein dem Schlüssel zugeordnetes Fahrzeug. Die drahtlose Übertragung von Befehlen umfasst eine drahtlose Nahbereichskommunikation.

WO 2013/166096 A1 beschreibt ein System und ein Verfahren zur verteilten Positionierung und kollaborativen Verhaltensbestimmung unter einer Gruppe von Objekten. Interaktive Tags, die jedem einer Vielzahl von Objekten zugeordnet sind, stellen jedem Objekt relative Positionsdaten und Zustandsinformationen bezüglich der anderen Objekte in der Nähe bereit. Unter Verwendung dieser Informationen entwickelt jedes Objekt ein räumliches Bewusstsein seiner Umgebung, einschließlich der Position und Aktion von Objekten in der Nähe, um sein Verhalten bei Bedarf zu ändern, um ein Ziel effektiver zu erreichen.

EP 3 471 068 A1 beschreibt ein System zum Verwalten von personenbezogenen Daten. Das System weist eine erste Sicherheitseinrichtung auf und eine zweite Sicherheitseinrichtung auf. Die Sicherheitseinrichtungen sind räumlich getrennt angeordnet und jeweils dazu eingerichtet, personenbezogene Daten zu erfassen und die erfassten personenbezogenen Daten Identitäten zuzuordnen. Das System weist des Weiteren ein Verwaltungssystem auf, das dazu eingerichtet ist, Berechtigungen zu den Identitäten zu verwalten. Die erste Sicherheitseinrichtung und die zweite Sicherheitseinrichtung anonymisieren jeweils die erfassten personenbezogenen Daten und lassen einen Zugriff auf die personenbezogenen Daten zu, wenn eine Berechtigung zum Zugriff auf personenbezogene Daten vorliegt, die der Identität zugeordnet ist, die den personenbezogenen Daten zugeordnet ist.

Der Erfindung liegt die Aufgabe zugrunde, ein verbessertes UWB-Überwachungssystem zum Detektieren einer Anwesenheit von UWB-Token bereitzustellen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein UWB-Überwachungssystem zur Überwachung eines räumlichen Bereiches. Das UWB-Überwachungssystem umfasst eine Mehrzahl von UWB-Sensoren, welche in dem räumlichen Bereich verteilt angeordnet sind. Die UWB-Sensoren sind für eine Kommunikation mittels UWB konfiguriert.

Die Mehrzahl von UWB-Sensoren umfasst eine Mehrzahl von Lokalisierungssensoren zum Bestimmen von Positionsdaten mobiler tragbarer UWB-Token innerhalb des räumlichen Bereiches. Das Bestimmen der Positionsdaten umfasst Laufzeitmessungen von UWB-Signalen zwischen den Lokalisierungssensoren und den UWB-Token.

Das UWB-Überwachungssystem ist konfiguriert zum Detektieren einer Anwesenheit eines unbekannten UWB-Tokens in dem räumlichen Bereich. Der unbekannte UWB-Token sendet ein erstes UWB-Nutzsignal. Das gesendete erste UWB-Nutzsignal ist gemäß einem dem Überwachungssystem unbekannten ersten UWB-Datenkodierungsschema kodiert.

Das Detektieren der Anwesenheit des unbekannten UWB-Tokens umfasst:

- Erfassen einer Mehrzahl von Sensorsignalen durch die räumlich verteilte Mehrzahl von Lokalisierungssensoren, wobei die erfassten Sensorsignale jeweils ein Rauschsignal und ein von dem unbekannten UWB-Token gesendetes erstes UWB-Nutzsignal umfassen, mit welchem das Rauschsignal überlagert ist, wobei das Nutzsignal infolge der räumlichen Verteilung der Lokalisierungssensoren jeweils mit einer sensorabhängigen ersten zeitlichen Verschiebung in den von den individuellen Lokalisierungssensoren erfassten Signalen auftritt,
- Verstärken des ersten UWB-Nutzsignals relativ zu dem Rauschsignal, wobei das Verstärken ein Kombinieren der erfassten Sensorsignale miteinander umfasst, wobei die erfassten Sensorsignale zum Kombinieren jeweils unter Verwendung einer sensorabhängigen zweiten zeitlichen Verschiebung zeitlich verschoben werden,
  wobei die verwendeten zweiten zeitlichen Verschiebungen der erfassten Sensorsignale jeweils invers zu der ersten zeitlichen Verschiebung des entsprechenden Sensorsignals sind und die entsprechende erste zeitliche Verschiebung kompensieren,
- Detektieren des verstärkten ersten UWB-Nutzsignals unter Verwendung der kombinierten Sensorsignale.

Unbekannte UWB-Token, welche UWB-Nutzsignale senden, die gemäß einem dem UWB-Überwachungssystem unbekannte UWB-Datenkodierungsschema kodiert sind, werden von einem UWB-Überwachungssystem im Allgemeinen nicht erkannt. Verfügt das UWB-Überwachungssystem nicht über das zum Kodieren verwendete UWB-Datenkodierungsschema, wird das UWB-Überwachungssystem nicht angesprochen, da es nicht erkennt, dass ein UWB-Signal von dem unbekannten UWB-Token gesendet wurde. Mithin vermag das UWB-Überwachungssystem weder die Anwesenheit des unbekannten UWB-Tokens in dem räumlichen Bereich zu detektieren, noch dessen Positionsdaten zu bestimmen. Aufgrund des breiten Frequenzbandes, welches UWB verwendet, ist ein übertragenes UWB-Nutzsignal nur schwer von allgegenwärtigem Hintergrundrauschen zu unterscheiden.

Ausführungsformen können den Vorteil haben, dass sie ein Detektieren der Anwesenheit des unbekannten UWB-Tokens in dem räumlichen Bereich ermöglichen. Sobald das unbekannte UWB-Token eine UWB-Kommunikation initiiert bzw. ein UWB-Signal sendet, trifft dieses UWB-Signal an den an den Lokalisierungssensoren des UWB-Überwachungssystems als Überlagerung eines Rauschsignals ein. Das UWB-Signal ist dabei an den einzelnen Lokalisierungssensoren nicht vom Rauschsignal zu trennen. Dieses Rauschsignal umfasst beispielsweise das Umgebungsrauschen des UWB-Überwachungssystems sowie das allgegenwärtige Grundrauschens der Komponenten des UWB-Überwachungssystems. Da das UWB-Signal an den räumlich verteilten Lokalisierungssensoren jedoch im Allgemeinen zeitliche versetzt eintrifft, können die Sensorsignale der einzelnen Lokalisierungssensoren unter Verwendung einer zeitlichen Verschiebung kombiniert werden, sodass die resultierende Überlagerung es erlaubt, das von dem unbekannten UWB-Token gesendete UWB-Signal des fremden UWB Senders zu verstärken, z.B. zu addieren, und so dessen Anwesenheit zu detektieren.

Nach Ausführungsformen werden beispielsweise die Sensorsignale von drei, vier oder mehr räumlich verteilten Lokalisierungssensoren miteinander kombiniert.

Bekannte mobile Kommunikationstechnologien, wie etwa Bluetooth, WLAN oder auch GSM können in vielerlei Weise angegriffen oder gestört werden können. Fällt im Falle einer bekannte mobilen Kommunikationstechnologie beispielsweise der eine Kanal weg, ist keine Kommunikation, Ortung, Benachrichtigen etc. über die entsprechende Kommunikationstechnologie mehr möglich. Ferner besteht eine hohe Abhängigkeit vom jeweiligen Anbieter bzw. Betreiber der Infrastruktur bzw. des Netzes der entsprechenden Kommunikationstechnologie.

Ausführungsformen können den Vorteil haben, dass unter Nutzung der UWB-Technologie eine breitbandige, nicht detektierbare, nicht störbare, mehrkanalige örtliche Kommunikationsverbindung bereitgestellt werden kann.

Eine Unterdrückung des UWB-Funksignales ist nicht ohne weiteres möglich, da das UWB-Funksignales parallel auf verschiedenen Frequenzen gleichzeitig gesendet wird. Dieses Sendemuster ist dynamisch wechselnd, mit einer UWB-Datenkodierung gemäß einem UWB-Datenkodierungsschema kodiert und nur den an der autorisierten Kommunikationsparteien bekannt. Ferner kann das UWB-Funksignales, anders als Funksignale im Falle von Bluetooth, WLAN, WiFi, GSM u.a., nicht über die Anwesenheit eines Signalträgers im entsprechenden Frequenzbereich geortet werden, da das UWB-Funksignal ohne Kenntnis des zur UWB-Datenkodierung verwendeten UWB-Datenkodierungsschemas quasi nur statistisches Rauschen darstellt.

Unter einem UWB-Token wird ein Hardwaretoken in Form eines mobilen tragbaren elektronischen Geräts verstanden, welches zu einer kabellosen Kommunikation mittels UWB konfiguriert ist. Ein UWB-Token kann zudem zu einer Bestimmung von Positionsdaten anhand einer Laufzeitmessung und Triangulation von UWB-Signalen konfiguriert sein, welche es von Lokalisierungssensoren des UWB-Überwachungssystems empfängt. Beispielsweise kann das UWB-Token als ein Dokument ausgestaltet sein, insbesondere ein Wert- oder Sicherheitsdokument. Unter einem "Dokument" werden papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeug-scheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise. In einem Speicher eines solchen Dokuments sind beispielsweise ein oder mehrere Attribute eines dem Dokument zugeordneten Nutzers oder Gegenstands gespeichert.

UWB ("Ultra Wideband") bezeichnet eine drahtlose Übertragung elektromagnetischer impulsförmiger Signale über eine Mehrzahl paralleler Funkkanäle mit kleiner Sendeleistungen, z.B. bis maximal 1 mW. Hierbei werden beispielsweise Frequenzbereiche mit einer Bandbreite von mindestens 500 MHz und/oder von mindestens 20 % des arithmetischen Mittelwertes von unterer und oberer Grenzfrequenz des genutzten Frequenzbandes verwendet.

UWB basiert auf einer Erzeugung von Impulsen mit einer möglichst kurzen Pulsdauer, weshalb das über UWB-Antenne abgestrahlt bzw. empfangen Spektrum entsprechend den Gesetzen der Fourier-Transformation umso größer bzw. breiter ist, je kürzer die Pulsdauer ist.

Dabei ist das Produkt aus zeitlicher und spektraler Breite des Impulses konstant. Dabei wird die gesamte Sendeleistung von wenigen Milliwatt oder weniger auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein Rauschen. Mithin wird eine kaum ortbare Kommunikation ermöglicht, welche im gleichen Frequenzbereich eingesetzt werden kann wie herkömmliche Übertragungsverfahren.

UWB verwendet keine feste Trägerfrequenz, welche moduliert wird. Eine Datenübertragung erfolgt vielmehr beispielsweise basierend auf einer Pulsphasenmodulation bzw. Pulspositionsmodulation ("Pulse-Position Modulation"/PPM) unter Verwendung einer Mehrzahl von Einzelpulsen. Weitere Möglichkeit zur Datenübertragung mittels UWB bietet eine Modulation von Polarität und/oder Amplitude der Impulse. Falls sich die Zeitpunkte der Einzelimpulse ausreichend unterscheiden, können mehrere UWB-Übertragungskanäle im gleichen Raumgebiet ohne gegenseitige Störung betrieben werden.

Mit zunehmender Bandbreite steigt die Übertragungskapazität, womit UWB-Systeme beispielsweise Nutzbitraten bis hin zum GBit/s-Bereich bereitstellen können. Reichweiten von UWB-Übertragungen können beispielsweise im Bereich von einigen wenigen Metern bis hin zu hundert Metern liegen.

Ein UWB-Datenkodierungsschema legt Modulationsparameter für die verwendeten Impulse fest. Die Modulationsparameter definieren, wie Impulse zu modulieren sind, damit diese Informationen und mithin Daten übertragen.

Die UWB-Technologie nutzt einen breiten Bereich des elektromagnetischen Spektrums von z.B. 3 bis 9 GHz und sendet gleichzeitig auf einer Vielzahl von Kanälen eine Art Bitmuster, welche gemäß einem spezifischen UWB-Datenkodierungsschemas kodiert ist. Ist einem Kommunikationspartner das verwendete UWB-Datenkodierungsschema bekannt, so kann dieser einen angebotenen UWB-Kommunikationskanal detektieren und an der Kommunikation teilnehmen. Werden nun simultan mehrere solcher UWB-Datenkodierungsschemata zum Kodieren mehrerer simultaner Kommunikationskanäle verwendet, können diese simultane Kommunikationskanäle parallel aufrechterhalten werden.

Nach Ausführungsformen ist der räumliche Bereich beispielsweise ein zugangsbeschränkter räumlicher Bereich, etwa ein zugangsbeschränkten Sicherheitsbereich. Der zugangsbeschränkte räumliche Bereich ist beispielsweise gegenüber der Umgebung abgegrenzt und bestimmungsgemäß nur über ein oder mehrere Ein- bzw. Ausgänge betretbar. Beispielsweise handelt es sich bei dem zugangsbeschränkten räumlichen Bereich um einen Indoor-Bereich bzw. Innenbereich.

Die UWB-Technologie ermöglicht zudem ein Implementieren eines Radarverfahrens unter Verwendung von UWB-Radarsensoren. Dabei wird, wie bei der UWB-Datenübertragung, ein elektromagnetisches Wechselfeld großer Bandbreite generiert, dessen Feldstärken klein sind. Je nach Beschaffenheit von Objekten im Ausbreitungsbereich des elektromagnetischen Wechselfeldes, wird dies das Wechselfeld deformieren. Das resultierende Feld kann von einem UWB-Sensor erfasst werden. Bei Kenntnis sowohl des Ausgangsfeldes als auch das resultierenden Feldes kennt, kann auf die Ursache der erfassten Deformation und mithin auf die Art und Geometrie des oder der Objekte im Ausbreitungsbereich des elektromagnetischen Wechselfeldes geschlossen werden.

UWB-Radarsensoren arbeiten beispielsweise auf Frequenzen zwischen 30 MHz und 12,4 GHz. Je nach Anwendung können beispielsweise Auflösungen von Zentimetern bis hin zu einigen Millimetern bei Arbeitsbandbreiten von 5 GHz erreicht werden.

Bei einem Radarverfahren werden kurze Impulse ausgesandt und mit den von dem oder den Objekten reflektierten Impulsverläufen verglichen. Damit lassen sich geometrische Größen wie beispielsweise Abstand, Dicke, Länge, Position, Körperform, Bewegung und/oder Geschwindigkeit bestimmen. Auch können Gegenstände durch Kleidung und Wände hindurch, detektiert werden. Hierbei werden die Eigenschaften des Ausbreitungsmediums für die elektromagnetischen Felder als bekannt vorausgesetzt.

UWB kann ein Tracking von mobilen Geräten verhindern, da über UWB kommunizierende Geräte, wie etwa UWB-Token, ohne Kenntnis der verwendeten UWB-Kodierung nicht lokalisierbar sind. Ferner stellt die verhältnismäßig kurze Reichweite von UWB sicher, dass ein Tracking und/oder Abhören aus der Ferne effektiv unterbunden werden kann. Zudem bietet die UWB-Kodierung eine eigenständige, instantane Verschlüsselung der übertragenen Daten, welche damit gegen ein Abhören abgesichert werden. Darüber hinaus weist UWB aufgrund des breiten Frequenzbandes eine hohe Resistenz gegenüber Störsignalen ("Jamming") auf. Aufgrund dieser speziellen, für Sicherheitsapplikationen vorteilhafter technischer Eigenschaften, kann unter Verwendung von UWB ein Überwachungssystem implementiert werden, welches einen hohen Schutz der Prozesse als auch der darin befindlichen bzw. verwendeten Sensordaten, insbesondere aber auch im Zusammenhang mit personenbezogenen Sensordaten von Beteiligten, gewährleisten kann. Insbesondere kann eine hohe Sicherheit der Datenübertragung mittels UWB sichergestellt werden.

Da die UWB-Technik auch höhere Datenraten zulässt, kann es insbesondere vorteilhaft für eine Übertragung von Sensordaten in Form von Videodaten, Tondaten und oder anderen umfangreichen sensorischen Messwerten sein.

Den Vorteilen der UWB-Technik stand bisher jedoch der Nachteil gegenüber, dass beispielsweise nur bekannte UWB-Token durch ein UWB-Überwachungssystem detektierbar waren. Ausführungsformen können den Vorteil haben, dass sie diesen Nachteil beheben. Somit kann das UWB-Überwachungssystem zugleich die Vorteile der sicheren Datenübertragung mittels UWB nutzen und in die Lage versetzt sein, unbekannte UWB-Token eigenständig zu detektieren.

Unter einem UWB-Sensor wird ein Sensor oder Anker verstanden, welcher zum Übertragen von erfassten Daten, z.B. Sensordaten, mittels UWB konfiguriert ist. Ferner kann ein UWB-Sensor, wie beispielsweise ein UWB-Radarsensor oder ein UWB-Lokalisierungssensor, dazu konfiguriert Sensordaten mittels UWB zu erfassen. Alternative kann ein UWB-Sensor dazu konfiguriert die Sensordaten mittels eines UWB-unabhängigen Verfahrens, etwa einem optischen, akustischen, chemischen, thermischen, elektromagnetischen und/oder vibrationsbasierten Verfahren. Nach Ausführungsformen sind die UWB-Sensoren für eine Datenübertragung ausschließlich mittels UWB konfiguriert. Nach Ausführungsformen können ein oder mehrere der UWB-Sensoren zusätzlich zum Übertragen von erfassten Daten mittels einer kabelgebundenen Datenverbindung konfiguriert sein. Nach Ausführungsformen ist ein Teil der UWB-Sensoren des UWB-Überwachungssystems zum Übertragen von erfassten Daten mittels einer kabelgebundenen Datenverbindung konfiguriert. Nach Ausführungsformen sind alle der UWB-Sensoren des UWB-Überwachungssystems zum Übertragen von erfassten Daten mittels einer kabelgebundenen Datenverbindung konfiguriert.

Unter Sensordaten werden mittels eines der UWB-Sensoren erfasste Daten verstanden, d.h. beispielsweise optische, akustische, chemische, thermische, elektromagnetische und/oder vibrationsbasierte Daten. Die Sensordaten werden von den erfassenden UWB-Sensoren innerhalb des UWB-Überwachungssystems mittels UWB übertragen. Nach Ausführungsformen können ein oder mehrere der UWB-Sensoren zusätzlich zum Übertragen von erfassten Daten mittels einer kabelgebundenen Datenverbindung konfiguriert sein. Bei den Sensordaten kann es sich ferner um Daten handeln, welche von den UWB-Sensoren mittels UWB erfasst wurden. Beispielsweise handelt es sich bei den Sensordaten um Sensordaten eines UWB-Radarsensors oder eines UWB-Lokalisierungssensors.

Nach Ausführungsformen umfasst das Kombinieren der erfassten Sensorsignale ein Addieren der erfassten Sensorsignale unter Verwendung der sensorabhängigen zweiten zeitlichen Verschiebungen oder ein Anwenden einer anderen mathematischen Operation. Ausführungsformen können den Vorteil haben, dass so das Signal-Rausch-Verhältnis des UWB-Signals erhöht werden kann. Das zeitlich versetzte Empfangen des UWB-Signals durch die verschiedenen Lokalisierungssensoren entspricht beispielsweise einem mehrfachen Senden des entsprechenden UWB-Signals. Durch ein solchen mehrfaches Senden eines Signals lässt sich das Rauschen reduzieren. Da Rauschen stochastisch auftritt, nimmt die Standardabweichung des Rauschsignals bei Summation von n Übertragungen um den Faktor $\sqrt{n}$ zu, während das Signal um den Faktor n zunimmt. Das Signal-Rausch-Verhältnis (engl. "signalto-noise ratio"/SNR) bezogen auf die Signalamplituden steigert sich gemäß dem um zentralen Grenzwertsatz daher um

$$n/\sqrt{n} = \sqrt{n}.$$

Nach Ausführungsformen umfasst das Kombinieren der erfassten Sensorsignale ein Anpassen der sensorabhängigen zweiten zeitlichen Verschiebungen bis die sensorabhängigen zweiten zeitlichen Verschiebungen jeweils die ersten zeitlichen Verschiebungen kompensieren. Ausführungsformen können den Vorteil haben, dass die sensorabhängigen zweiten zeitlichen Verschiebungen ausgehend von Initialwerten angepasst werden können, bis sie jeweils die ersten zeitlichen Verschiebungen kompensieren. So kann die Verstärkung des UWB-Signals maximiert werden.

Nach Ausführungsformen erfolgt das Anpassen der einzelnen sensorabhängigen zweiten zeitlichen Verschiebungen sukzessive Sensorsignal für Sensorsignal. Ausführungsformen können den Vorteil haben, dass mit jedem zusätzlichen Sensorsignal, welches der Kombination zugefügt wird, die Verstärkung des UWB-Signals zunimmt. Für jedes Hinzufügen kann die sensorabhängige zweite zeitliche Verschiebung für das entsprechende Sensorsignal ausgehend von einem Initialwert angepasst werden, bis die Verstärkung einen Maximalwert annimmt. Nach Ausführungsformen erfolgt das Kombinieren der erfassten Sensorsignale sukzessive Sensorsignal für Sensorsignal ausgehend von einer Kombination aus zwei ersten Sensorsignalen der Mehrzahl von Sensorsignalen.

Nach Ausführungsformen werden die sensorabhängigen zweiten zeitlichen Verschiebungen für die einzelnen Sensorsignale in Abhängigkeit von einer Entfernung des jeweiligen Lokalisierungssensor von einem Zugang zu dem räumlichen Bereich in UWB-Signalreichweite von den Lokalisierungssensoren gewählt. Nach Ausführungsformen werden die sensorabhängigen zweiten zeitlichen Verschiebungen für die einzelnen Sensorsignale in Abhängigkeit von einer Entfernung des jeweiligen Lokalisierungssensor von einem Zugang zu einem vordefinierten räumlichen Abschnitt des räumlichen Bereiches in UWB-Signalreichweite von den Lokalisierungssensoren gewählt. Die ersten zeitliche Verschiebungen sind proportional zu den Entfernungen der Lokalisierungssensor vom Ursprung des UWB-Signals. Ausführungsformen können den Vorteil haben, dass sie sich den Umstand zu Nutze machen, dass im Falle eines räumlichen Bereiches mit fest definierten Zugängen und/oder eines vordefinierten räumlichen Abschnittes des räumlichen Bereiches mit fest definierten Zugängen ein unbekannter UWB-Token erstmals detektierbar wird, wenn einen der fest definierten Zugänge passiert. Da die Entfernungen stationärer Lokalisierungssensor zu diesen Zugängen bekannt sind, sind mithin auch die zu erwartenden ersten zeitlichen Verschiebungen beim Passieren der Zugänge durch das UWB-Token bekannt. Somit lassen sich auch die zweiten zeitlichen Verschiebungen zum Kompensieren der ersten zeitlichen Verschiebungen direkt bestimmen.

Nach Ausführungsformen umfassen die erfassten Sensorsignale ein oder mehrere zweite UWB-Nutzsignalen, welche gemäß dem Überwachungssystem bekannten zweiten UWB-Datenkodierungsschemata kodiert sind. Das Detektieren der Anwesenheit des unbekannten UWB-Tokens umfasst ferner ein Herausfiltern der zweiten UWB-Nutzsignale aus den erfassten Sensorsignalen. Ausführungsformen können den Vorteil haben, dass bekannte UWB-Signale effektiv aus den Sensorsignalen bzw. Rauschsignalen der Sensorsignale herausgefiltert werden können.

Nach Ausführungsformen umfasst das Detektieren der Anwesenheit des unbekannten UWB-Tokens ferner ein Bestimmen des dem UWB-Überwachungssystem unbekannten ersten UWB-Datenkodierungsschemas unter Verwendung des detektierten, verstärkten ersten UWB-Nutzsignals. Nach Ausführungsformen ist das UWB-Überwachungssystem konfiguriert zum Ausführen einer ersten UWB-Kommunikation mit dem UWB-Token, welche gemäß dem bestimmten ersten UWB-Datenkodierungsschema kodiert ist.

Ausführungsformen können den Vorteil haben, dass ein zu wählendes Kommunikationsschema bestimmt werden kann. Nach dem Bestimmen des unbekannten ersten UWB-Datenkodierungsschemas, d.h. dem zu wählenden Kommunikationsschemas, wird eine UWB-Kommunikation zwischen UWB-Überwachungssystem und dem unbekannten UWB-Token ermöglicht, welche gemäß dem bestimmten ersten UWB-Datenkodierungsschema kodiert ist. Über diese UWB-Kommunikation können sich das UWB-Token und/oder das UWB-Überwachungssystem jeweils gegenüber dem anderen identifizieren und/oder authentifizieren. Ferner können so in sicherer Weise kryptographische Schlüssel zum Verschlüsseln anderer Kommunikationskanäle, insbesondere anderer nicht UWB-kodierter Kommunikationskanäle, ausgetauscht werden.

Nach Ausführungsformen wird beispielsweise in einem Überwachungsmodus geprüft, ob sich ein unbekannter UWB-Token bzw. ein systemfremder UWB-Token innerhalb des UWB-Überwachungssystems befindet. Bei dem systemfremden UWB-Token handelt es sich beispielsweise um ein UWB-Token, welches ein UWB-Nutzsignal sendet, welches ein von dem Überwachungssystem nicht verwendetes, nicht zur aktuellen Verwendung, nicht zur Verwendung durch diesen UWB.-Token, nicht zur Verwendung innerhalb des entsprechenden räumlichen Bereichs vorgesehen ist. Wird eine Anwesenheit eines systemfremden UWB-Tokens detektiert, wird das von dem entsprechenden UWB-Token verwendetes UWB-Datenkodierungsschema bestimmt. Nach Ausführungsformen schaltet das UWB-Überwachungssystem daraufhin von einem Überwachungsmodus in einen Integrationsmodus um zur Integration des systemfremden UWB-Tokens in das UWB-Überwachungssystem. Als Voraussetzung für eine Integration wird beispielsweise ein Berechtigungsnachweis des systemfremden UWB-Tokens geprüft. Im Zuge der Integration wird dem UBW-Token beispielsweise ein zur Kommunikation in dem Überwachungssystem zu verwendendes UWB-Datenkodierungsschema mittgeteilt und/oder es werden ein oder mehrere kryptographische Schlüssel an das zu integrierende UBW-Token übertragen.

Nach Ausführungsformen ist das UWB-Überwachungssystem ferner konfiguriert zum

- Empfangen eines Berechtigungsnachweises des UWB-Tokens zum Zugang zu und/oder Aufenthalt in dem räumlichen Bereich,
- Validieren des empfangenen Berechtigungsnachweises.

Ausführungsformen können den Vorteil haben, dass geprüft werden kann, ob der unbekannte UWB-Token berechtigt ist zum Zugang zu und/oder Aufenthalt in dem räumlichen Bereich.

Nach Ausführungsformen ist das UWB-Überwachungssystem ferner konfiguriert,

- auf ein erfolgreiches Validieren des Berechtigungsnachweises hin, Senden eines der dem UWB-Überwachungssystem bekannten zweiten UWB-Datenkodierungsschemata unter Verwendung der ersten UWB-Kommunikation an das UWB-Token,
- Ausführen einer zweiten UWB-Kommunikation mit dem UWB-Token, welche gemäß dem an das UWB-Token gesendeten zweiten UWB-Datenkodierungsschema kodiert ist.

Ausführungsformen können den Vorteil haben, dass das zuvor unbekannte UWB-Token im Falle einer gültigen Berechtigung zum Zugang zu und/oder Aufenthalt in dem räumlichen Bereich einen dem UWB-Überwachungssystem bekanntes zweites UWB-Datenkodierungsschema zur Verfügung gestellt bekommt, mittels dessen das UWB-Token eine zweite UWB-Kommunikation mit dem UWB-Überwachungssystem aufbauen kann, d.h. Zugang zu dem UWB-Überwachungssystem erhält. Nach Ausführungsformen kann ein unter Verwendung dieses zweiten UWB-Datenkodierungsschema kodierter UWB-Kanal zum sicheren Datenaustausch verwendet werden. Beispielsweise kann der UWB-Kanal zu einem sicheren Austauschen kryptographischer Schlüssel zum Verschlüsseln anderer Kommunikationskanäle, insbesondere anderer nicht UWB-kodierter Kommunikationskanäle, verwendet werden.

Nach Ausführungsformen verwenden die ersten und zweiten UWB-Datenkodierungsschemata eines oder mehrere der folgenden Kodierungsverfahren: Pulspositionsmodulation, Pulspolaritätsmodulation, Pulsamplitudenmodulation, orthogonale Pulsformmodulation. Ausführungsformen können den Vorteil haben, dass ein effektives und/oder effizientes Kodierungsverfahren bereitgestellt wird.

Eine Pulspositionsmodulation bzw. Pulsphasenmodulation (engl. "pulse position modulation") bezeichnet eine Modulation zur Datenübertragung unter Verwendung für zeitdiskret abgetastete Signale. Ein Impuls wird relativ zu einem konstanten Referenztakt in der zeitlichen Position, d.h. Phase, verschoben. Diese Phasenverschiebung kodiert die zu übertragenden Daten, während Periodendauer und Amplitude des Impulses bleiben gleich. Falls sich die Zeitpunkte der Einzelimpulse ausreichend unterscheiden, können mehrere UWB-Kommunikationen bzw. UWB-Kommunikationskanäle im gleichen Raumgebiet ohne gegenseitige Störung betrieben werden.

Im Falle einer Pulspolaritätsmodulation wird die Polarität der übertragenen Impulse moduliert bzw. verändert. Diese Polaritätsmodulation kodiert die zu übertragenden Daten. Im Falle einer Pulsamplitudenmodulation wird die Amplitude der übertragenen Impulse moduliert bzw. verändert. Diese Amplitudenmodulation kodiert die zu übertragenden Daten. Eine orthogonale Pulsformmodulation verwendet zwei orthogonale UWB-Pulsformen, welche zusätzlich polaritätsmoduliert werden. Die Impulse können im Falle einer solchen Modulation fortlaufend als kontinuierlicher Strom gesendet werden, wodurch die Bitrate gleich der Impulsrate sein kann.

Nach Ausführungsformen umfassen die ein oder mehreren zusätzlichen UWB-Sensoren Sensoren zum Erfassen optischer, akustischer, chemischer, thermischer, elektromagnetischer und/oder vibrationsbasierter Sensordaten.

Ausführungsformen können den Vorteil haben, dass unter Verwendung der entsprechenden Sensoren eine Vielzahl unterschiedlicher Sensordaten erfasst und somit eine Vielzahl unterschiedlicher Situationen bzw. Gegebenheiten innerhalb des räumlichen Bereiches erkannt werden können. Die UWB-Sensoren umfassen beispielsweise ein oder mehrere UWB-Radarsensoren, Glasbruchsensoren, Trittschallsensoren, Gassensoren, Bewegungsmelder, Videosensoren, Infrarotsensoren, Temperatursensoren und/oder Rauchsensoren.

Positionsdaten der UWB-Token werden beispielsweise mittels der Lokalisierungssensoren erfasst. Sensordaten, welche indikativ für eine Anwesenheit einer Person sind, können beispielsweise unter Verwendung von UWB-Radar, Hochfrequenzstrahlung, Mikrowellenstrahlung, Dopplerradar, Laser, Ultraschall, Infraschall, Infrarotstrahlung, Vibrationsmessungen oder Gaskonzentrationsmessungen erfasst werden. Hält sich eine Person im Erfassungsbereich eines Sensors auf, reflektiert, streut oder unterbricht diese beispielsweise von dem Sensor ausgesandte Strahlung oder Wellen, wie UWB-Radar, Hochfrequenzstrahlung, Mikrowellenstrahlung, Dopplerradar, Laserstrahlen, Ultraschall, oder erzeugt messbare Strahlung, Wellen oder anderweitige Einflüsse, wie Infrarotstrahlung, Vibrationen, z.B. Trittschall, Infraschall oder Gaskonzentrationsänderungen, z.B. eine Erhöhung der Kohlenstoffdioxidkonzentration.

Nach Ausführungsformen umfassen die erfassten Sensordaten personenbezogene Sensordaten und das UWB-Überwachungssystem ist konfiguriert zum

- Erfassen von Sensordaten in dem räumlichen Bereich unter Verwendung der UWB-Sensoren, wobei die erfassten Sensordaten personenbezogene Sensordaten umfassen,
- Filtern der erfassten Sensordaten unter Verwendung eines Anonymisierungsfilters, wobei der Anonymisierungsfilter dazu konfiguriert ist, die personenbezogenen Sensordaten zu anonymisieren,
- Auswerten der erfassten Sensordaten zum Detektieren eines Ausnahmeereignisses,
- auf das Detektieren des Ausnahmeereignisses hin, zeitlich begrenzten Aussetzen des Anonymisierens der personenbezogene Sensordaten.

Ausführungsformen können den Vorteil haben, dass sichergestellt werden kann, dass personenbezogene Sensordaten, soweit diese von den UWB-Sensoren erfasst werden, in Folge der Anonymisierung nicht oder nur in einer solchen Form zur Verfügung gestellt werden, dass keine Rückschlüsse auf die Identität der Personen ermöglicht werden, auf welche die personenbezogenen Daten bezogen sind. Nach Ausführungsformen umfasst das Anonymisieren insbesondere ein Verändern personenbezogener Sensordaten derart, dass Einzelangaben über persönliche oder sachliche Verhältnisse nicht mehr oder nur mit einem unverhältnismäßig großen Aufwand an Zeit, Kosten und Arbeitskraft einer bestimmten oder bestimmbaren natürlichen Person zugeordnet werden können. Das Verändern umfasst beispielsweise ein inhaltliches Umgestalten erfasster personenbezogener Sensordaten bis hin zum Löschen derselben. Ein Löschen bezeichnet dabei beispielsweise ein Unkenntlichmachen personenbezogener Sensordaten bis hin zu einem vollständigen Entfernen der entsprechenden personenbezogenen Sensordaten von einem Speicher zum Speichern erfasster Sensordaten. Bei dem Speicher kann es sich beispielsweise um einen lokalen oder einen zentralen Speicher des UWB-Überwachungssystems handeln.

Personenbezogene Sensordaten bezeichnen Sensordaten, welche eine Identifikation einer Person ermöglichen oder einer Person zuordenbar sind, auf welche die personenbezogene Sensordaten bezogen sind. Insbesondere sind personenbezogene Sensordaten beispielsweise mittels eines der UWB-Sensoren erfasste Einzelangaben über persönliche oder sachliche Verhältnisse einer bestimmten oder bestimmbaren natürlichen Person. Beispielsweise umfassen die personenbezogene Sensordaten visuelle Sensordaten, wie etwa Video- und/oder Fotodaten, anhand derer eine Person erkannt werden kann. Dies ist insbesondere der Fall, wenn anhand der Video- und/oder Fotodaten ein Gesicht einer Person erkannt werden kann.

Ein Anonymisierungsfilter ist dazu konfiguriert selektiv personenbezogene Daten zu anonymisieren. Beispielsweise kann der Anonymisierungsfilter dazu konfiguriert sein Sensordaten, welche von bestimmten UWB-Sensoren bzw. einer bestimmten Art von UWB-Sensoren des UWB-Überwachungssystems erfasst werden, zu anonymisieren. Dabei handelt es sich beispielsweise um Video- und/oder Bilddaten, welche etwa unter Verwendung einer Überwachungskamera erfasst werden und auf denen individuelle Personen erkennbar sind.

Ein Ausnahmeereignis bezeichnet eine Anomalie in den erfassten Sensordaten, d.h. eine Datenkonstellation, welche unter vordefinierten Betriebsbedingungen nicht zu erwarten ist. Insbesondere kann es sich bei der Anomalie um eine Notfallsituation, wie etwa ein Feuer oder ein unerlaubtes Eindringen in den und/oder Bewegen innerhalb des räumlichen Bereiches.

Nach Ausführungsformen handelt es sich bei dem Ausnahmeereignis um ein erfolgreiches Detektieren der Anwesenheit des unbekannten UWB-Tokens. Nach Ausführungsformen handelt es sich bei dem Ausnahmeereignis um ein Fehlen eines gültigen Berechtigungsnachweises des detektierten unbekannten UWB-Tokens.

Nach Ausführungsformen handelt es sich bei dem Ausnahmeereignis um ein Fehlschlagen der zweiten UWB-Kommunikation mit dem UWB-Token.

Nach Ausführungsformen ist das Aussetzen des Anonymisierens auf personenbezogene Sensordaten beschränkt, welche von UWB-Sensoren erfasst werden, die einen vordefinierten Bezug zu dem detektierten Ausnahmeereignis aufweisen. Beispielsweise besteht ein vordefinierter Bezug darin, dass die UWB-Sensoren, für deren personenbezogene Sensordaten das Anonymisieren ausgesetzt wird, einem selben räumlichen Abschnitt des räumlichen Bereiches zugeordnet sind wie der oder die UWB-Sensoren, in deren erfassten Sensordaten das Ausnahmeereignis detektiert wird. Ausführungsformen können den Vorteil haben, dass das Aussetzen des Anonymisierens nicht nur zeitlich, sondern auch räumlich begrenzt wird. Mithin kann ein unnötiges Aussetzen des Anonymisierens, z.B. für personenbezogene Daten, welche nichts mit dem Ausnahmeereignis zu tun haben, vermieden werden. Nach Ausführungsformen besteht der vordefinierte Bezug zusätzlich oder alternativ darin, dass UWB-Sensoren, für deren personenbezogene Sensordaten das Anonymisieren ausgesetzt wird, vordefinierten räumlichen Abschnitt des räumlichen Bereiches zugeordnet sind. Bei den entsprechenden räumlichen Abschnitten handelt es sich beispielsweise um Zu- und Ausgänge eines zugangsbeschränkten Bereiches. Im Falle eines möglichen unberechtigten Eindringens in den zugangsbeschränkten räumlichen Bereich oder bei einem möglichen Notfall, wie etwa einem Feueralarm, kann es von Vorteil sein zu erfassen, wer den zugangsbeschränkten räumlichen Bereich betritt und/oder verlässt oder wer versucht den zugangsbeschränkten räumlichen Bereich zu betreten und/oder zu verlassen.

Nach Ausführungsformen wird das Anonymisieren aller durch das UWB-Überwachungssystem erfasster personenbezogener Sensordaten zeitlich begrenzt ausgesetzt. Ausführungsformen können den Vorteil haben, dass sichergestellt werden kann, dass keine für eine Handhabung und/oder Behebung des Ausnahmeereignisses relevanten und/oder notwendigen personenbezogener Sensordaten aufgrund der Anonymisierung fehlen.

Nach Ausführungsformen umfasst das Anonymisieren durch den Anonymisierungsfilter ein Löschen zumindest eines Teils der personenbezogenen Sensordaten. Das zeitlich begrenzte Aussetzen des Anonymisierens umfasst ein Speichern der personenbezogenen Sensordaten, welche innerhalb eines begrenzten Zeitfensters erfasst werden.

Ausführungsformen können den Vorteil haben, dass im Falle eines Löschens, d.h. eines vollständigen Entfernens personenbezogener Sensordaten von lokalen und/oder zentralen Speichern des UWB-Überwachungssystems, sichergestellt werden kann, dass niemand Zugriff auf diese Daten erlangen kann. Tritt jedoch ein Ausnahmeereignis auf, so werden nur für diesen speziellen Fall zeitlich begrenzt personenbezogener Sensordaten, wie etwa Video- und/oder Bilddaten, gespeichert. Nach Ausführungsformen werden die gespeicherten Daten zum Zwecke einer Datenanalyse bereitgestellt, insbesondere zum Zwecke einer Identifikation von Personen, auf welche die gespeicherten personenbezogenen Sensordaten bezogen sind.

Nach Ausführungsformen handelt es sich bei dem Speichern um ein zeitlich begrenztes Speichern. Beispielsweise werden die gespeicherten personenbezogenen Sensordaten nach ihrer Auswertung und/oder auf eine Beendigung der Ausnahmesituation hin wieder gelöscht. Nach Ausführungsformen handelt es sich bei dem Speichern um ein dauerhaftes Speichern.

Nach Ausführungsformen beginnt das begrenzte Zeitfenster mit dem Detektieren des Ausnahmeereignisses. Nach Ausführungsformen endet das begrenzte Zeitfenster mit Ablauf einer vorbestimmten Zeitspanne oder einem Enden des Detektierens des Ausnahmeereignisses.

Ausführungsformen können den Vorteil haben, dass das Speichern der personenbezogenen Sensordaten zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Anonymisierens beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Anonymisierens beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Anonymisierens nicht und/oder nicht mehr notwendig ist. Die vorbestimmte Zeitspanne kann beispielsweise eine Länge von Sekunden und/oder Minuten aufweisen.

Nach Ausführungsformen erfolgt das Löschen der personenbezogenen Sensordaten jeweils durch den die zu löschenden personenbezogenen Sensordaten erfassenden UWB-Sensor. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels UWB an ein Speichermodul des UWB-Überwachungssystems. Nach Ausführungsformen umfasst das Speichern der personenbezogenen Sensordaten jeweils ein Übertragen der personenbezogenen Sensordaten durch den die zu speichernden personenbezogenen Sensordaten erfassenden UWB-Sensor zumindest teilweise und/oder vollständig mittels einer kabelgebundenen Datenverbindung an ein Speichermodul des UWB-Überwachungssystems.

Ausführungsformen können den Vorteil haben, dass bei einem direkten Löschen durch den erfassenden UWB-Sensor sichergestellt werden kann, dass die zu löschenden personenbezogenen Sensordaten innerhalb des Überwachungssystems nicht über den erfassenden UWB-Sensor hinausgelangen. Mithin kann effektiv verhindert werden, dass sich jemand auf unerlaubte Weise Zugriff auf die personenbezogenen Sensordaten verschaffen kann. Ausführungsformen können ferner den Vorteil haben, dass die in dem Speichermodul gespeicherten personenbezogenen Sensordaten im Bedarfsfall zum Handhaben und/oder Beheben des Ausnahmeereignisses herangezogen werden können. Beispielsweise können die gespeicherten personenbezogenen Sensordaten analysiert werden, um zu bestimmen welche Personen in das Ausnahmeereignis involviert sind und/oder involviert sein könnten. Bei dem Speichermodul kann es sich um ein lokales Speichermodul einer Mehrzahl von dezentral über das UWB-Überwachungssystem verteilten Speichermodulen oder um ein zentrales Speichermodul des UWB-Überwachungssystems handeln.

Nach Ausführungsformen umfasst das Anonymisieren durch den Anonymisierungsfilter ein Verschlüsseln zumindest eines Teils der personenbezogenen Sensordaten. Nach Ausführungsformen umfasst das zeitlich begrenzte Aussetzen des Anonymisierens ein zeitlich begrenztes Bereitstellen der entsprechenden personenbezogenen Sensordaten in unverschlüsselter Form.

Ausführungsformen können den Vorteil haben, dass durch ein Verschlüsseln der personenbezogenen Sensordaten Zugriffe auf die personenbezogenen Sensordaten effektiv verhindert werden können. Andererseits kann im Falle eines Ausnahmeereignisses ein Zugriff auf bereits erfasste personenbezogenen Sensordaten mittels eines Entschlüsselns ermöglicht werden. Beispielsweise werden die personenbezogenen Sensordaten in entschlüsselter Form nur zeitlich begrenzt zur Verfügung gestellt.

Nach Ausführungsformen erfolgt das Verschlüsseln der personenbezogenen Sensordaten jeweils durch den die zu verschlüsselnden personenbezogenen Sensordaten erfassenden UWB-Sensor.

Ausführungsformen können den Vorteil haben, dass die personenbezogenen Sensordaten direkt bei ihrer Erfassung verschlüsselt werden und indem UWB-Überwachungssystem nur in verschlüsselter Form weiterverarbeitet werden. Eine Verschlüsselung kann beispielsweise mit einem öffentlichen kryptographischen Schlüssel eines asymmetrischen Schlüsselpairs erfolgen, sodass es von einem Besitzer des zugehörigen geheimen kryptographischen Schlüssels des entsprechenden asymmetrischen Schlüsselpairs entschlüsselt werden kann. Bei dem entsprechenden Besitzer handelt es sich beispielsweise um ein zentrales oder dezentrales Steuermodul des UWB-Überwachungssystems. Die geheimen kryptographischen Schlüssel werden beispielsweise in einem geschützten Speicherbereich eines Speichermoduls gespeichert, welcher dem entsprechenden Steuermodul zugeordnet ist. Nach Ausführungsformen stellt das Steuermodul allen UWB-Sensoren oder zumindest allen zum Erfassen personenbezogenen Sensordaten konfigurierten UWB-Sensoren einen einheitlichen öffentlichen kryptographischen Schlüssel zum Verschlüsseln zur Verfügung. Nach Ausführungsformen stellt das Steuermodul allen UWB-Sensoren oder zumindest allen zum Erfassen personenbezogenen Sensordaten konfigurierten UWB-Sensoren jeweils einen individuellen, dem entsprechenden UWB-Sensoren zugeordneten öffentlichen kryptographischen Schlüssel zum Verschlüsseln zur Verfügung. Nach Ausführungsformen stellt das Steuermodul den UWB-Sensoren oder zumindest den zum Erfassen personenbezogenen Sensordaten konfigurierten UWB-Sensoren jeweils gruppenweise einen individuellen, der entsprechenden Gruppe zugeordneten einheitlichen öffentlichen kryptographischen Schlüssel zum Verschlüsseln zur Verfügung. Die Gruppen können dabei so eingeteilt sein, dass sie jeweils UWB-Sensoren umfassen, welche demselben räumlichen Abschnitt des räumlichen Bereiches zugeordnet sind, bei welchen es sich um dieselbe Art von UWB-Sensor handelt oder welche zum Erfassen derselben Art von personenbezogenen Sensordaten konfiguriert sind.

Nach Ausführungsformen umfasst das Bereitstellen der personenbezogenen Sensordaten in unverschlüsselter Form ein Aussetzen des Verschlüsselns der personenbezogenen Sensordaten, welche innerhalb eines begrenzten Zeitfensters erfasst werden. Ausführungsformen können den Vorteil haben, dass der Aufwand für ein Entschlüsseln der entsprechenden personenbezogenen Sensordaten vermieden werden kann und diese personenbezogenen Sensordaten zudem unverschlüsselt bleiben. Nach Ausführungsformen umfasst das Bereitstellen der personenbezogenen Sensordaten in unverschlüsselter Form ein Entschlüsseln verschlüsselter personenbezogenen Sensordaten, welche innerhalb des begrenzten Zeitfensters erfasst werden. Ausführungsformen können den Vorteil haben, dass die personenbezogenen Sensordaten selbst im Falle eines Ausnahmeereignisses ausschließlich in verschlüsselter Form gespeichert werden. Ein Bereitstellen der personenbezogenen Sensordaten in unverschlüsselter Form kann somit effektiv zeitlich beschränkt werden.

Nach Ausführungsformen beginnt das begrenzte Zeitfenster eine vorbestimmte Zeitspanne vor dem Detektieren des Ausnahmeereignisses oder mit dem Detektieren des Ausnahmeereignisses. Nach Ausführungsformen endet das begrenzte Zeitfenster mit Ablauf einer vorbestimmten Zeitspanne nach dem Detektieren des Ausnahmeereignisses oder mit einem Enden des Detektierens des Ausnahmeereignisses.

Ausführungsformen können den Vorteil haben, dass das Bereitstellen der personenbezogenen Sensordaten in unverschlüsselter Form zeitlich auf ein Zeitfenster begrenzt bleibt, welches in Bezug zu dem Detektierten Ausnahmeereignis steht. Es kann beispielsweise davon ausgegangen werden, dass lediglich in diesem Zeitfenster erfasste personenbezogene Sensordaten im Kontext des detektierten Ausnahmeereignis von Relevanz sind. Nach Ausführungsformen endet das begrenzte Zeitfenster beispielsweise, wenn das Ausnahmeereignis nicht mehr detektiert wird bzw. nicht mehr detektierbar ist. Im Falle eines möglichen Feuers als Ausnahmeereignis kann das Ausnahmeereignis beispielsweise in Form eines Detektierens von Rauch durch einen als Rauchmelder ausgestalteten UWB-Sensor des Überwachungssystems detektiert werden. Wird das Ausnahmeereignis nicht mehr detektiert, d.h. kein Rauch mehr detektiert, wird beispielsweise das Aussetzen des Verschlüsselns beendet. Nach Ausführungsformen wird am Ende der vorbestimmten Zeitspanne geprüft, ob das Ausnahmeereignis noch detektierbar ist und/oder ob weitere Voraussetzungen erfüllt sind. Ist das Ausnahmeereignis nicht mehr detektierbar ist und sind gegebenenfalls die weiteren Voraussetzungen erfüllt, wird das Aussetzen des Verschlüsselns beendet. Andernfalls wird das Aussetzen nochmals um die vorbestimmte Zeitspanne wiederholt bzw. fortgesetzt. Weitere Voraussetzungen umfassen beispielsweise ein Protokollieren einer Bestätigung in dem UWB-Überwachungssystem, dass das Ausnahmeereignis überprüft wurde und keine weiteren Maßnahmen notwendig sind bzw. alle notwendigen Maßnahmen ergriffen wurden. Alternative oder zusätzlich können die weiteren Voraussetzungen beispielsweise ein Protokollieren einer Bestätigung in dem UWB-Überwachungssystem umfassen, dass das Aussetzen des Verschlüsselns nicht und/oder nicht mehr notwendig ist. Die vorbestimmte Zeitspanne kann beispielsweise eine Länge von Sekunden und/oder Minuten aufweisen. Ein Beginn des begrenzten Zeitfensters eine vorbestimmte Zeitspanne vor dem Detektieren des Ausnahmeereignisses kann den Vorteil haben, dass auch relevante personenbezogene Sensordaten, welche im Vorfeld des Ausnahmeereignisses erfasst wurden in unverschlüsselter Form bereitgestellt werden können.

Nach Ausführungsformen ist das UWB-Überwachungssystem ferner konfiguriert zum

- Empfangen einer Anfrage zum Freigeben von erfassten Sensordaten,
- Prüfen eines von der Anfrage umfassten Berechtigungsnachweises zum Zugriff auf die angefragte Sensordaten,
- auf eine erfolgreiche Prüfung des Berechtigungsnachweises hin, Freigeben des Zugriffs auf die angefragten Sensordaten.

Ausführungsformen können den Vorteil haben, dass erfasste Sensordaten, insbesondere personenbezogene Sensordaten, nur dazu berechtigten Personen zur Verfügung gestellt werden. Eine Freigabe von Sensordaten, wie etwa Daten der Position und/oder anderer Daten, erfolgt beispielsweise gemäß eines Berechtigungsprofiles des Anfragenden. Somit kann ein effektiver Datenschutzlayer in das UWB-Überwachungssystem integriert werden. Ein Berechtigungsnachweis kann beispielsweise in Form eines Berechtigungszertifikats erbracht werden. Nach Ausführungsformen wird die Anfrage beispielsweise von einem dezentralen oder zentralen Steuermodul des UWB-Überwachungssystems empfangen und geprüft. Im Falle einer erfolgreichen Prüfung erfolgt beispielsweise auch die Freigabe durch das entsprechende Steuermodul. Beispielsweise werden die angefragte Sensordaten in Antwort auf die Anfrage an den Sender der Anfrage gesendet oder auf einer Anzeigevorrichtung des UWB-Überwachungssystems angezeigt. Die Übertragung der angefragte Sensordaten erfolgt beispielsweise in verschlüsselter Form, insbesondere kann sie unter Verwendung einer Ende-zu-Ende-Verschlüsselung erfolgen.

Nach Ausführungsformen werden die erfassten Sensordaten in Kategorien eingeteilt und das Prüfen des Berechtigungsnachweises umfasst ein Prüfen, ob der Berechtigungsnachweis zu einem Zugriff auf Sensordaten der Kategorie berechtigt, welcher die angefragten Sensordaten zugeordnet sind.

Ausführungsformen können den Vorteil haben, dass Berechtigungen kategorieweise gewährt werden können, sodass Berechtigungsnachweise auf ein oder mehrere der Kategorien beschränkt werden können.

Nach Ausführungsformen werden die erfassten personenbezogenen Sensordaten in Kategorien eingeteilt und das Aussetzen der Anonymisierung erfolgt, beispielsweise in Abhängigkeit von der Art des detektierten Ausnaheereignisses, selektiv nur für ein oder mehrere ausgewählte Kategorien.

Nach Ausführungsformen wird die Zugriffsberechtigung des Berechtigungsnachweises auf das Detektieren des Ausnahmeereignisses hin zeitlich beschränkt erweitert. Eine Erweiterung des Berechtigungsnachweises bedeutet, das mit einem gegebenen Berechtigungsnachweis im Falle eines Detektierens eines Ausnahmeereignisses mehr Kategorien eingesehen werden dürfen, als wenn kein Ausnahmeereignis detektiert wird. Nach Ausführungsformen ist der Umfang der Erweiterung abhängig von der Art des detektierten Ausnahmeereignisses. Nach Ausführungsformen wird die Zugriffsberechtigung im Falle eines Detektierens eines Ausnahmeereignisses für alle gültigen Berechtigungsnachweise zum Zugriff auf zumindest eine Kategorie von Sensordaten auf alle Kategorien von Sensordaten zeitlich beschränkt erweitert.

Ausführungsformen können den Vorteil haben, dass beispielsweise in Abhängigkeit der Sensibilität der Sensordaten unterschiedliche Berechtigungsnachweise für einen Zugriff auf die entsprechenden Sensordaten notwendig sind und somit gesteuert werden kann, wer in welchem Umfang Zugriffsrechte auf die erfassten Sensordaten des UWB-Überwachungssystems gewährt bekommt. Somit kann eine Anpassung der Datenfreigabe beispielsweise durch das Berechtigungsprofil des Anfragenden an die aktuelle Gefahrensituation implementiert werden.

Nach Ausführungsformen werden den erfassten Sensordaten jeweils Ursprungs-IDs zugeordnet. Eine Voraussetzung für die erfolgreiche Prüfung des Berechtigungsnachweises umfasst eine gültige Bestätigung des Berechtigungsnachweises zum Zugriff auf die angefragten Sensordaten durch ein oder mehrere den Ursprungs-IDs der angefragten Sensordaten zugeordnete Instanzen.

Ausführungsformen können den Vorteil haben, das für einen Zugriff auf die erfassten Sensordaten eine Freigabe durch ein oder mehrere den Ursprungs-IDs, d.h. dem Ursprung, der angefragten Sensordaten zugeordnete Instanzen notwendig ist. Nach Ausführungsformen identifizieren die Ursprung-IDs jeweils den UWB-Sensor, welcher die entsprechenden Sensordaten erfasst hat, und/oder das UWB-Token, welches durch die entsprechenden Sensordaten sensiert wurde. Nach Ausführungsformen handelt es sich bei den entsprechenden Instanzen jeweils um die entsprechenden UWB-Sensoren, UWB-Token oder Nutzer bzw. Administratoren, welche den entsprechenden UWB-Sensoren oder UWB-Token zugeordnet sind.

Beispielsweise wird jeder lokalisierten Position, d.h. erfassten Sensordaten zur Lokalisation von UWB-Token, eine abgesicherte Information des UWB Token aufgeprägt, so dass stets Ursprung und Eigentümer der entsprechenden Sensordaten bekannt sind. Anfragen bezüglich einer Position oder Daten eines UWB-Tokens müssen in diesem Fall beispielsweise zuerst immer durch das betroffene UWB-Token oder einen Träger und/oder Vertreter desselben freigegeben werden.

Nach Ausführungsformen werden im Falle des Freigebens der angefragten Sensordaten Art, Zeit, Ort, Empfänger und/oder Verwendung der freigegebenen Sensordaten protokolliert.

Ausführungsformen können den Vorteil haben, dass anhand der entsprechenden Protokolle genau nachvollziehbar ist, was mit den erfassten Sensordaten geschieht, insbesondere wer Zugriff auf diese erhält. Nach Ausführungsformen erfolgt das Protokollieren in einer Blockchain. Eine Blockchain kann den Vorteil haben, dass diese eine fälschungssichere Speicherstruktur zum Speichern der zu protokollierenden Daten bereitstellt.

Nach Ausführungsformen umfasst das UWB-Überwachungssystem ein oder mehrere vortrainierte Maschinenlernmodule, welche jeweils dazu trainiert sind anhand von Anomalien in den erfassten Sensordaten Ausnahmeereignisse zu erkennen. Ausführungsformen können den Vorteil haben, dass ein automatisiertes Detektieren von Ausnahmeereignisse ermöglicht wird.

Nach Ausführungsformen umfasst die Mehrzahl von UWB-Sensoren eine Mehrzahl von Lokalisierungssensoren, welche zur Positionsbestimmung von UWB-Token innerhalb des räumlichen Bereiches konfiguriert sind. Die Positionsbestimmung erfolgt unter Verwendung von Laufzeitmessungen von UWB-Signalen zwischen UWB-Token und/oder Lokalisierungssensoren.

Ausführungsformen können den Vorteil haben, das unter Verwendung der UWB-Token effektiv überwacht werden kann, wo sich berechtigte Personen innerhalb des räumlichen Bereiches aufhalten. Beispielsweise erhält jede Peron, welche den räumlichen Bereich, etwa einen zugangsbeschränkten räumlichen Bereich, betritt einen entsprechenden UWB-Token. Wenn Daten zu einer Zuordnung einer Token-ID einer bestimmten Person nicht oder kryptographisch gesichert, z.B. in verschlüsselter Form, gespeichert werden, wird durch die Überwachung der UWB-Token eine anonymisierte Überwachung der Träger der UWB-Token ermöglicht. Beispielsweise ist eine notwendige Voraussetzung für ein Entschlüsseln der Daten zur Zuordnung ein Detektieren eines Ausnahmeereignisses.

Eine Lokalisierung von UWB-Token erfolgt beispielsweise mittel Triangulation unter Verwendung zumindest zwei oder drei Lokalisierungssensoren in Form von UWB-Antennen. Dabei können die Triangulationssignale von dem UWB-Token und/oder von den UWB-Antennen gesendet werden. Eine Auswertung der Triangulationssignale kann durch das UWB-Token und/oder die UWB-Antennen und/oder einem Auswertemodul des Überwachungssystems erfolgen.

Nach Ausführungsformen sendet das UWB-Überwachungssystem einen Aktivierungscode. Die UWB-Token werden jeweils bei Eintritt in eine Sendereichweite des UWB-Überwachungssystems auf einen Empfang des Aktivierungscodes hin aktiviert und bei Verlassen der Sendereichweite des UWB-Überwachungssystems auf ein Ausbleiben des Empfangs des Aktivierungscodes hin deaktiviert.

Ausführungsformen können den Vorteil haben, dass das UWB-Token nur innerhalb des räumlichen Bereiches bzw. innerhalb der Sendereichweite des UWB-Überwachungssystems aktiv Signale unter Verwendung von UWB sendet und somit überhaupt detektierbar ist.

Nach Ausführungsformen umfasst das Aktivieren der UWB-Token jeweils ein Aktivieren eines Sendens von UWB-Signalen durch den jeweiligen UWB-Token, insbesondere das Aktivieren des Sendens von UWB-Signalen an das Überwachungssystem. Durch das Aktivieren wird der entsprechende UWB-Token für das Überwachungssystem sichtbar. Nach Ausführungsformen umfasst das Deaktivieren der UWB-Token jeweils ein Deaktivieren des Sendens von UWB-Signalen durch den jeweiligen UWB-Token, insbesondere das Deaktivieren des Sendens von UWB-Signalen an das Überwachungssystem. Durch das Deaktivieren wird der entsprechende UWB-Token für das Überwachungssystem unsichtbar.

Nach Ausführungsformen werden Zugangsberechtigungen zu und/oder Aufenthaltsberechtigungen in einem räumlichen Bereich, bei welchem es sich um einen zugangsbeschränkten räumlichen Bereich handelt, unter Verwendung der UWB-Token nachgewiesen.

Ausführungsformen können den Vorteil haben, das mittels der UWB-Token nicht nur Bewegungen der Träger innerhalb eines zugangsbeschränkten räumlichen Bereiches nachverfolgt werden können, sondern kontrolliert werden kann, ob eine Zugangsberechtigungen und/oder Aufenthaltsberechtigungen zu bzw. in dem zugangsbeschränkten räumlichen Bereich und/oder bestimmte räumlichen Abschnitte desselben vorliegt. Basierend hierauf kann erkannt werden, ob sich ein Träger eines UWB-Tokens berechtigter Weise in dem zugangsbeschränkten räumlichen Bereich und/oder einem räumlichen Abschnitt desselben aufhält. Beispielsweise können Zugangsschranken, wie etwa Türen zu dem zugangsbeschränkten räumlichen Bereich und/oder einem räumlichen Abschnitt desselben automatisch öffnen, wenn sich ein Träger eines UWB-Tokens mit gültiger Zugangsberechtigungen der Zugangsschranke nähert. Nach Ausführungsformen können für unterschiedliche räumliche Abschnitte des zugangsbeschränkten räumlichen Bereiches unterschiedliche Zugangsberechtigungen notwendig sein.

Nach Ausführungsformen werden Zugangsberechtigungen und/oder Aufenthaltsberechtigungen durch den Besitz des UWB-Tokens nachgewiesen. Nach werden Zugangsberechtigungen und/oder Aufenthaltsberechtigungen durch Berechtigungszertifikate nachgewiesen. Ein Berechtigungszertifikat ist ein digitales Zertifikat, welches einem UWB-Token und/oder einem Nutzer des entsprechenden UWB-Tokens eine Zugangsberechtigung und/oder Aufenthaltsberechtigung zuweist. Beispielsweise definiert ein Berechtigungszertifikat Zugangsberechtigungen und/oder Aufenthaltsberechtigungen, umfasst einen öffentlichen kryptographischen Schlüssel eines dem UWB-Token zugeordneten asymmetrischen kryptographischen Schlüsselpaars, eine Token-ID, Angaben zum Aussteller des Berechtigungszertifikats und/oder eine digitale Signatur eines Ausstellers. Bei dem Aussteller kann es sich beispielsweise um eine externe Instanz, dezentrales oder zentrales Steuermodul des UWB-Überwachungssystems oder einen anderen UWB-Token handeln, welcher selber über die erteilten Zugangsberechtigungen und/oder Aufenthaltsberechtigungen verfügt. Zugangsberechtigungen und/oder Aufenthaltsberechtigungen lassen sich beispielsweise unter Verwendung des Berechtigungszertifikats in Verbindung mit einer Signatur des UWB-Tokens unter Verwendung eines privaten kryptographischen Schlüssels des dem UWB-Token zugeordneten asymmetrischen kryptographischen Schlüsselpaars. Anhand des von dem Berechtigungszertifikat bereitgestellten öffentlichen kryptographischen Schlüssels kann die Signatur geprüft und mithin der Besitz des privaten kryptographischen Schlüssels seitens des UWB-Tokens verifiziert werden. Das Berechtigungszertifikat definiert beispielsweise für den Besitzer des privaten kryptographischen Schlüssels durch den Aussteller des Berechtigungszertifikats gewährte Zugangsberechtigungen und/oder Aufenthaltsberechtigungen. Nach Ausführungsformen sind die Zugangsberechtigungen und/oder Aufenthaltsberechtigungen zeitlich beschränkt. Beispielsweise ist eine zeitliche Beschränkung durch ein Ablaufdatum und/oder eine Ablaufzeit des Berechtigungszertifikats definiert.

Nach Ausführungsformen umfasst das Detektieren des Ausnahmeereignisses ein Erfassen einer Anzahl von Personen in dem räumlichen Bereich, etwa einem zugangsbeschränkten räumlichen Bereich, unter Verwendung der UWB-Sensoren, welche zumindest lokal von der Anzahl der unter Verwendung der UWB-Token in dem räumlichen Bereich erfassten Anzahl von zugangsberechtigten Personen abweicht.

Ausführungsformen können den Vorteil haben, dass Versuche sich ohne Zugangsberechtigung Zugang zu dem zugangsbeschränkten räumlichen Bereich oder Abschnitten desselben zu verschaffen und/oder Versuche sich der Bewegungsüberwachung durch das UWB-Überwachungssystem innerhalb des zugangsbeschränkten räumlichen Bereiches effektiv detektiert werden können.

Nach Ausführungsformen ist jedes der UWB-Token jeweils einem Nutzer zugeordnet. In den UWB-Token sind beispielsweise jeweils ein oder mehrere Referenzwerte für personenbezogenen Sensordaten zum Authentifizieren des zugeordneten Nutzers, d.h. Authentifizierungsdaten, gespeichert. Der Nachweis einer Zugangsberechtigung und/oder Aufenthaltsberechtigung unter Verwendung eines der UWB-Token umfasst beispielsweise ein Bestätigen eines Authentifizierens des dem entsprechenden UWB-Token zugeordneten Nutzers durch das UWB-Token. Das Authentifizieren durch das UWB-Token umfasst beispielsweise ein lokales Validieren von Authentifizierungsdaten durch das UWB-Token unter Verwendung der in dem UWB-Token gespeicherten ein oder mehreren Referenzwerten.

Nach Ausführungsformen umfassen die UWB-Token beispielsweise jeweils einen Sensor zum Erfassen der Authentifizierungsdaten. Nach Ausführungsformen werden die Authentifizierungsdaten des Nutzers beispielsweise jeweils durch einen Sensor der UWB-Tokens erfasst. Nach Ausführungsformen werden die Authentifizierungsdaten beispielsweise durch einen lokalen Sensor des UWB-Überwachungssystems erfasst und an den UWB-Token zum Validieren gesendet. Nach Ausführungsformen erfolgt das Senden der erfassten Authentifizierungsdaten in verschlüsselter Form. Nach Ausführungsformen werden die Referenzwerte in verschlüsselter Form gespeichert und das lokale Validieren der erfassten Authentifizierungsdaten erfolgt in verschlüsselter Form.

Nach Ausführungsformen umfassen die Authentifizierungsdaten biometrische Daten des Nutzers, welche unter Verwendung eines biometrischen Sensors erfasst werden. Biometrische Daten können beispielsweise umfassen: DNA-Daten, Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster, Zahnmusterdaten.

Nach Ausführungsformen umfassen die Authentifizierungsdaten verhaltensbasierte Daten des Nutzers. Verhaltensbasiert Daten sind Daten, welche auf einem intrinsischen Verhalten des Nutzers beruhen und können beispielsweise umfassen: Bewegungsmuster, Gangmuster, Arm-, Hand-, Fingerbewegungsmuster, Lippenbewegungsmuster. Ein Verwenden von verhaltensbasierten Daten zum Authentifizieren des Nutzers kann den Vorteil haben, dass der Nutzer zum Zwecke des Authentifizierens sein übliches, für ihn charakteristisches Verhalten fortsetzen kann, ohne dass für ihn untypische zusätzliche Handlungen notwendig sind. Insbesondere muss der Nutzer sein übliches Verhalten nicht unterbrechen.

Zum Erfassen der verhaltensbasierten Daten wird ein Sensor zum Erfassen verhaltensbasierter Daten verwendet. Bei den verhaltensbasierten Daten handelt es sich beispielsweise um Bewegungsdaten, welche unter Verwendung eines als Bewegungssensor konfigurierten Authentifizierungssensor erfasst werden. Der Bewegungssensor kann beispielsweise einen Beschleunigungssensor umfassen. Eine Bewegung kann beispielsweise durch Integration über Beschleunigungsmesswerte, welche der Beschleunigungssensor erfasst, berechnet werden. Der Bewegungssensor kann beispielsweise zudem seine Lage im Raum und/oder Veränderungen der Lage detektieren. Beispielsweise umfasst der Bewegungssensor ein Gyroskop. Bei den durch den Bewegungssensor erfassten Bewegungsdaten handelt es sich beispielsweise um Beschleunigungs-, Neigungs- und/oder Positionsdaten.

Bei erfassten Bewegungsdaten handelt es sich beispielsweise um Daten von Bewegungen des UWB-Tokens, welche dadurch verursacht werden, dass der Nutzer das UWB-Token mit sich führt, beispielsweise am Körper trägt. Durch die charakteristischen Bewegungen des Nutzers wird der UWB-Token in einer für den Nutzer charakteristischer Weise mitbewegt. Dies ist selbst dann der Fall, wenn der Nutzer nicht aktive mit dem UWB-Token interagiert, z.B. keine Benutzerschnittstelle des UWB-Tokens, wie etwa eine Taste, eine Tastatur, einen Touchscreen, ein Mikrophon, nutzt.

Nach Ausführungsformen umfasst das UWB-Token ein Klassifikationsmodul, welches zum Erkennen eines oder mehrerer generischer Bewegungsmuster unter Verwendung von Bewegungsdaten konfiguriert ist. Bei den Bewegungsmustern kann es sich beispielweise um grob- und/oder feinmotorische Bewegungen des UWB-Tokens handeln, wie sie für eine Nutzung des UWB-Tokens, etwa ein Mitführen und/oder Tragen am Körper, durch einen individuellen Nutzer charakteristisch sind. Beispielsweise ist das Klassifikationsmodul zum Erkennen der generischen Bewegungsmuster unter Verwendung von Trainingsdatensätzen mit Bewegungsdaten einer Nutzerkohorte vortrainiert.

Nach Ausführungsformen wird der Nutzer im Zuge einer Einlernphase als Nutzer des UWB-Tokens registriert. Nach Ausführungsformen umfasst die Einlernphase ein Erfassen von Bewegungsdaten des Nutzers durch einen Authentifizierungssensor in Form eines Bewegungssensors des UWB-Tokens und Extrahieren von ein oder mehreren für den zu registrierenden Nutzer charakteristischen Referenzwerten.

Nach Ausführungsformen umfasst ein verhaltensbasiertes Authentifizieren eines Nutzers unter Verwendung des UWB-Tokens die folgenden Schritte:

- Erfassen von Bewegungsdaten durch einen Authentifizierungssensor in Form eines Bewegungssensors des UWB-Tokens,
- Eingeben der erfassten Bewegungsdaten in das Klassifikationsmodul,
- Generieren eines Klassifikationsergebnisses durch das Klassifikationsmodul, ob der aktuelle Nutzer ein in dem UWB-Token registrierte Nutzer ist,
- Erzeugen eines Authentifizierungssignals, falls das Klassifikationsergebnis ein Prüfungskriterium erfüllt, wobei das Authentifizierungssignal eine erfolgreiche Authentifizierung des aktuellen Nutzers signalisiert.

Das Prüfkriterium kann beispielsweise umfassen, dass eine ausreichen hohe Übereinstimmung zwischen den erfassten Bewegungsdaten und einem oder mehreren für den registrierten Nutzer hinterlegten Referenzwerten vorliegt. Ferner kann das Prüfkriterium umfassen, dass die erfassten Bewegungsdaten und/oder die verwendeten ein oder mehreren Referenzwerte ein maximales Alter nicht überschreiten.

Nach Ausführungsformen werden die vorgenannten Schritte des Erfassens der Bewegungsdaten, des Eingebens der Bewegungsdaten und des Generierens des Klassifikationsergebnisses wiederholt nacheinander ausgeführt. Ferner wird zusätzliche zum Schritt des Generierens des Klassifikationsergebnisse jeweils der Schritt ausgeführt:

- Speichern des Klassifikationsergebnisses in dem Speicher des UWB-Tokens.

Das Erzeugen eines Authentifizierungssignals umfasst beispielsweise:

auf eine Authentifizierungsanfrage hin, Zugreifen auf den Speicher des UWB-Tokens zum Auslesen des gespeicherten Klassifikationsergebnisses, beispielsweise des zuletzt gespeicherten Klassifikationsergebnisses,
Auslesen und Auswerten des Klassifikationsergebnisses gemäß dem Prüfungskriterium.

Nach Ausführungsformen können erfasste Bewegungsdaten im Falle einer erfolgreichen Authentifizierung des Nutzers zum Anpassen und/oder Verbessern der für den entsprechenden Nutzer hinterlegten Referenzwerte verwendet werden.

Nach Ausführungsformen ist die Authentifizierung wissensbasiert. Beispielsweise umfassen die Authentifizierungsdaten ein persönliches Passwort des Nutzers. Bei dem Passwort kann es sich beispielsweise um eine alphanumerische Zeichenfolge handeln.

Nach Ausführungsformen ist die Authentifizierung besitzbasiert. Nach Ausführungsformen umfassen die Authentifizierungsdaten signierte Daten eines oder mehrere weiterer dem Nutzer zugeordneter elektronischer Geräte, insbesondere mobile tragbare elektronische Geräte. Bei den entsprechenden elektronischen Geräten handelt es sich beispielsweise um Smart Devices, welche der Nutzer mit sich führt, etwa wie Smartphone, Smartwatch, Smartglasses, Phablets, Tablets, Smart band, Smart Keychain, Smartcard etc. Diese elektronischen Geräte senden ein reichweitenbeschränktes Signal, welches ihre Anwesenheit signalisiert. Beispielsweise umfasst das Signal eine ID des entsprechenden elektronischen Gerätes. Beispielsweise ist das Signal mit einem kryptographischen Signaturschlüssel des entsprechenden elektronischen Gerätes signiert. Bei dem Signal kann es sich beispielsweise um ein Bluetooth oder ein UWB-Signal handeln. Im Falle einer Nutzung eines UWB-Signals, handelt es sich bei der Mehrzahl von elektronischen Geräten um eine Mehrzahl von UWB-Token. Für ein erfolgreiches Authentifizieren des Nutzers kann es notwendig sein, dass dieser eine bestimmte Anzahl an ihm zugeordneten elektronischen Geräten mit sich führt. Ein elektronisches Gerät mag gestohlen werden, je höher jedoch die Anzahl der für das erfolgreiche Authentifizieren notwendigen elektronischen Geräten ist, desto geringer ist die Wahrscheinlichkeit, dass diese von einem anderen Nutzer als dem registrierten Nutzer mitgeführt werden, beispielsweise infolge eines Diebstahls.

Nach Ausführungsformen ist jedes der UWB-Token jeweils einem Nutzer zugeordnet. In den UWB-Token sind jeweils ein oder mehrere Referenzwerte für personenbezogenen Sensordaten zum Authentifizieren des zugeordneten Nutzers gespeichert. Der Nachweis einer Zugangsberechtigung und/oder Aufenthaltsberechtigung unter Verwendung eines der UWB-Token umfasst ein Bestätigen eines Authentifizierens des dem entsprechenden UWB-Token zugeordneten Nutzers durch das UWB-Token. Das Authentifizieren durch das UWB-Token umfasst ein lokales Validieren von personenbezogenen Sensordaten durch das UWB-Token unter Verwendung der in dem UWB-Token gespeicherten ein oder mehreren Referenzwerten.

Detektieren ein oder mehrere UWB-Sensoren, etwa Trittschallsensoren, Bewegungsmelder, Lichtschranken oder Gasdetektoren, eine Anwesenheit einer Person in einem räumlichen Abschnitt des räumlichen Bereiches, in welchem kein UWB-Token detektiert wird, so ist dies ein Hinweis auf einen Versuch eines unerlaubten Eindringens. Ebenso können Unterschiede in Bewegungsmustern von UWB-Token und detektierten Personen auf unberechtigte Aktivitäten hindeuten, etwa falls ein UWB-Token an einer Stelle ruht, während anhand der erfassten Sensordaten Bewegungen einer Person detektiert werden.

Nach Ausführungsformen umfasst ein Ausnahmeereignis beispielsweise ein Erfassen einer Anzahl von Personen, welche die Anzahl der erfassten zugangsberechtigten Personen bzw. der erfassten UWB-Token zumindest lokal überschreitet.

Nach Ausführungsformen umfasst das Detektieren des Ausnahmeereignisses ein Erfassen eines UWB-Tokens in einem räumlichen Abschnitt des räumlichen Bereiches, etwa eines zugangsbeschränkten räumlichen Bereiches, für welchen der entsprechende UWB-Token keine Zugangsberechtigung besitzt.

Nach Ausführungsformen umfasst das Detektieren des Ausnahmeereignisses ein Erfassen von nicht personenbezogenen Sensordaten, welche einen vordefinierten Schwellenwert überschreiten.

Ausführungsformen können den Vorteil haben insbesondere Notfallsituationen effektiv erkannt werden können, wie etwa ein Feuer unter Verwendung eines als Rauchmelder konfigurierten UWB-Sensors oder ein Einbruch unter Verwendung eines als Glasbruch konfigurierten UWB-Sensors. So kann beispielsweise erhöhte Bewegungsaktivität und ein gleichzeitiger Temperaturanstieg zunächst als unklares Ausnahmeereignis bis hin zur Gefahrensituation interpretiert werden.

Nach Ausführungsformen umfasst die Mehrzahl von UWB-Sensoren Sensoren zum Erfassen optischer, akustischer, chemischer, thermischer, elektromagnetischer und/oder vibrationsbasierter Sensordaten.

Ausführungsformen können den Vorteil haben, dass unter Verwendung der entsprechenden Sensoren eine Vielzahl unterschiedlicher Sensordaten erfasst und somit eine Vielzahl unterschiedlicher Situationen bzw. Gegebenheiten innerhalb des räumlichen Bereiches erkannt werden können. Die UWB-Sensoren umfassen beispielsweise ein oder mehrere UWB-Radarsensoren, Glasbruchsensoren, Trittschallsensoren, Gassensoren, Bewegungsmelder, Videosensoren, Infrarotsensoren, Temperatursensoren und/oder Rauchsensoren.

Nach Ausführungsformen umfasst das UWB-Überwachungssystem ein digitales Funknetzwerk mit einer Mesh-Topologie, welches zum Übertragen der erfassten Sensordaten unter Verwendung von UWB konfiguriert ist.

Ausführungsformen können den Vorteil haben, dass erfassten Sensordaten effektiv über das UWB-Überwachungssystem übertragen werden können. Ferner bietet eine Mesh-Topologie eine hohe Ausfallsicherheit, da bei einem Ausfall einzelner Komponenten der Mesh-Topologie weiterhin eine Datenübertragung über alternative Routen möglich ist. Zudem kann bei einem Ausfall eines Teilbereichs der Mesh-Topologie ein Betrieb mit dem verbleibenden Teil der Mesh-Topologie aufrechterhalten werden.

Nach Ausführungsformen können den Vorteil haben, dass in dem auf UWB basierenden Funknetzwerk mit einer Mesh-Topologie Positionsdaten für mehrere und/oder alle Netzwerkknoten, d.h. UWB-Sensoren und/oder UWB-Token bereitgestellt werden bzw. bestimmt werden können. Eine Bestimmung von Positionsdaten kann beispielsweise unter Verwendung eines auf Laufzeitmessungen von UWB-Signalen basierenden Triangulationsverfahrens erfolgen. Bei den Positionsdaten kann es sich um relative und/oder absolute Positionsdaten handeln. Zum bestimmen absoluter Positionsdaten müssen Positionsdaten zumindest ein oder mehrere stationärer Referenzpunkte bekannt sein. Ausführungsformen können den Vorteil haben, dass für eine zielgerichtete Weiterleitung von Daten in dem UWB-basierten Funknetzwerk mit Mesh-Topologie ein positionsbasiertes Routingverfahren genutzt werden kann, um unter Verwendung der mittels UWB bestimmten Positionsdaten jeweils einen kürzesten oder anderweitig besten Pfad zwischen einem Quellknoten und einem Zielknoten innerhalb des Funknetzwerks zu bestimmen.

Nach Ausführungsformen sind ein oder mehrere der UWB-Sensoren als UWB-Transceiver zum Weiterleiten von UWB-Übertragungssignalen konfiguriert. Nach Ausführungsformen umfasst das UWB-Überwachungssystem zusätzlich zu den UWB-Sensoren ein oder mehrere UWB-Transceiver, welche zum Weiterleiten der UWB-Übertragungssignale konfiguriert sind.

Ausführungsformen können den Vorteil haben, dass ein Weiterleiten von Daten mittels UWB in effektiver Weise unter Verwendung der UWB-Sensoren und/oder zusätzlicher UWB-Transceiver implementiert werden kann.

Ausführungsformen umfassen ferner ein Verfahren zum Steuern eines UWB-Überwachungssystems zur Überwachung eines räumlichen Bereiches. Das UWB-Überwachungssystem umfasst eine Mehrzahl von UWB-Sensoren, welche in dem räumlichen Bereich räumlich verteilt angeordnet sind. Die UWB-Sensoren sind für ein Erfassen von Sensordaten und für ein Übertragen der erfassten Sensordaten mittels UWB konfiguriert.

Ausführungsformen umfassen ferner ein Verfahren zum Steuern eines UWB-Überwachungssystems zur Überwachung eines räumlichen Bereiches. Das UWB-Überwachungssystem umfasst eine Mehrzahl von UWB-Sensoren, welche in dem räumlichen Bereich verteilt angeordnet sind. Die UWB-Sensoren sind für eine Kommunikation mittels UWB konfiguriert.

Die Mehrzahl von UWB-Sensoren umfasst eine Mehrzahl von Lokalisierungssensoren zum Bestimmen von Positionsdaten mobiler tragbarer UWB-Token innerhalb des räumlichen Bereiches. Das Bestimmen der Positionsdaten umfasst Laufzeitmessungen von UWB-Signalen zwischen den Lokalisierungssensoren und den UWB-Token.

Das UWB-Überwachungssystem ist konfiguriert zum Detektieren einer Anwesenheit eines unbekannten UWB-Tokens in dem räumlichen Bereich. Der unbekannte UWB-Token sendet ein erstes UWB-Nutzsignal. Das gesendete erste UWB-Nutzsignal ist gemäß einem dem Überwachungssystem unbekannten ersten UWB-Datenkodierungsschema kodiert.

Das Verfahren umfasst zum Detektieren der Anwesenheit des unbekannten UWB-Tokens umfasst:

- Erfassen einer Mehrzahl von Sensorsignalen durch die räumlich verteilte Mehrzahl von Lokalisierungssensoren, wobei die erfassten Sensorsignale jeweils ein Rauschsignal und ein von dem unbekannten UWB-Token gesendetes erstes UWB-Nutzsignal umfassen, mit welchem das Rauschsignal überlagert ist, wobei das Nutzsignal infolge der räumlichen Verteilung der Lokalisierungssensoren jeweils mit einer sensorabhängigen ersten zeitlichen Verschiebung in den von den individuellen Lokalisierungssensoren erfassten Signalen auftritt,

- Verstärken des ersten UWB-Nutzsignals relativ zu dem Rauschsignal, wobei das Verstärken ein Kombinieren der erfassten Sensorsignale miteinander umfasst, wobei die erfassten Sensorsignale zum Kombinieren jeweils unter Verwendung einer sensorabhängigen zweiten zeitlichen Verschiebung zeitlich verschoben werden, wobei die verwendeten zweiten zeitlichen Verschiebungen der erfassten Sensorsignale jeweils invers zu der ersten zeitlichen Verschiebung des entsprechenden Sensorsignals sind und die entsprechende erste zeitliche Verschiebung kompensieren,

- Detektieren des verstärkten ersten UWB-Nutzsignals unter Verwendung der kombinierten Sensorsignale.

Nach Ausführungsformen ist das Verfahren zum Steuern des UWB-Überwachungssystems dazu konfiguriert jede der zuvor beschrieben Ausführungsformen des UWB-Überwachungssystems zu steuern.

Das Verfahren umfasst ferner:

- Erfassen von Sensordaten in dem räumlichen Bereich unter Verwendung der UWB-Sensoren, wobei die erfassten Sensordaten personenbezogene Sensordaten umfassen,

- Filtern der erfassten Sensordaten unter Verwendung eines Anonymisierungsfilters, wobei der Anonymisierungsfilter dazu konfiguriert ist, die personenbezogenen Sensordaten zu anonymisieren,

- Auswerten der erfassten Sensordaten zum Detektieren eines Ausnahmeereignisses,

- auf das Detektieren des Ausnahmeereignisses hin, zeitlich begrenzten Aussetzen des Anonymisierens der personenbezogene Sensordaten.

Im Weiteren werden Ausführungsformen der Erfindung mit Bezugnahme auf die Zeichnungen näher erläutert. Es zeigen:

Figur 1     ein schematisches Diagramm eines exemplarischen UWB-Tokens,

Figur 2     ein schematisches Diagramm eines exemplarischen UWB-Sensors,

Figuren 3     schematische Diagramme exemplarischer UWB-Signale in Zeit- und Frequenzdomäne,

Figuren 4     schematische Diagramme exemplarischer UWB-Datenkodierungen,

Figur 5     ein schematisches Diagramm eines exemplarischen UWB-Überwachungssystems,

Figur 6     ein Flussdiagramm eines exemplarischen Verfahrens zum Steuern eines UWB-Überwachungssystems,

Figur 7     ein Flussdiagramm eines exemplarischen Verfahrens zum Steuern eines UWB-Überwachungssystems,

Figur 8     ein schematisches Diagramm eines exemplarischen UWB-Überwachungssystems,

Figur 9     ein schematisches Diagramm eines exemplarischen UWB-Sensors,

Figur 10     ein Flussdiagramm eines exemplarischen Verfahrens zum Steuern eines UWB-Überwachungssystems und

Figur 11     ein Flussdiagramm eines exemplarischen Verfahrens zum Steuern eines UWB-Überwachungssystems.

Elemente der nachfolgenden Ausführungsformen, die einander entsprechen, werden mit denselben Bezugszeichen gekennzeichnet.

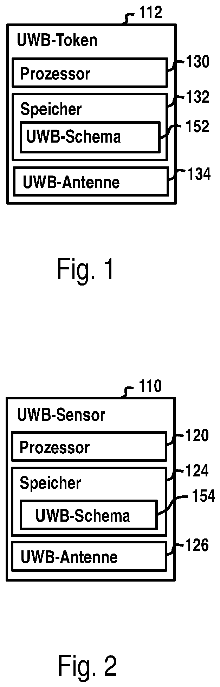

Figur 1 zeigt ein exemplarisches UWB-Token 112, welches einen Prozessor 130, einen Speicher 132 und eine Kommunikationsschnittstelle in Form einer UWB-Antenne 134 umfasst. Der Prozessor 130 ist dazu konfiguriert durch Ausführen von Programminstruktionen, welche beispielsweise in dem Speicher 132 gespeichert sind, das UBW-Token 112 zu steuern. In dem Speicher 132 kann ferner beispielsweise eine Token-ID gespeichert sein. Das UWB-Token 112 ist dazu konfiguriert über die UWB-Antenne 134 UWB-Signale zu senden und zu empfangen. Beispielsweise sendet das UWB-Token 112 UWB-Signale, welche einen Zeitstempel und/oder die Token-ID umfassen. Ferner ist in dem Speicher 132 beispielweise eine UWB-Datenkodierungsschema 152. Das UWB-Token 112 ist dazu konfiguriert ein UWB-Signal zu senden, welches gemäß dem UWB-Datenkodierungsschema 152 kodiert ist. Ist einem UWB-Überwachungssystem dieses UWB-Datenkodierungsschema 152 unbekannt, ist es nicht ohne weiteres eine UWB-Kommunikation des UWB-Tokens 112 zu erkennen. Erkennt das UWB-Überwachungssystem nicht die UWB-Signale des UWB-Tokens 112, kann es auch nicht dessen Anwesenheit detektieren.

Nach Ausführungsformen kann die Kommunikationsschnittstelle 134 des UWB-Tokens 112 ferner für eine zusätzliche kabellose, UWB-lose Kommunikation konfiguriert sein, wie etwa Bluetooth, WLAN, WiFi oder GSM. Daten werden unter Verwendung der zusätzlichen Kommunikation beispielsweise mit einem kryptographischen Schlüssel, etwa einem symmetrischen Schlüssel und/oder einem privaten oder öffentlichen Schlüssel eines asymmetrischen Schlüsselpaars, verschlüsselt übertragen. Beispielsweise wird unter Verwendung des kryptographischen Schlüssels eine Ende-zu-Ende-Verschlüsselung zwischen dem UWB-Token 112 und einer die verschlüsselten Daten sendenden oder empfangenden externen Kommunikationsvorrichtung, wie etwa einem entfernten Server, aufgebaut. Der kryptographischen Schlüssel wird beispielsweise über einen UWB-Kommunikationskanal bereitgestellt, d.h. beispielsweise an das und/oder von dem UWB-Token 112 gesendet. Der kryptographische Schlüssel wird bzw. ist beispielsweise in dem Speicher 132 des UWB-Tokens 112 gespeichert, insbesondere in einem geschützten Speicherbereich des Speichers 132.

Figur 2 zeigt einen exemplarischen UBW-Sensor 110 eines UWB-Überwachungssystems 100, bei welchem es sich beispielsweise um einen Lokalisierungssensor handelt. Allgemein kann es sich bei einem UWB-Sensor um eine stationäre UWB-Antenne bzw. einen stationären UWB-Anker oder auch ein UWB-Token handeln. Dieser UBW-Sensor 110 umfasst einen Prozessor 120, welcher Programminstruktionen ausführt, die beispielsweise in einem Speicher 124 des UBW-Sensors 110 gespeichert sind, und den UBW-Sensor 110 gemäß den Programminstruktionen steuert. Ferner umfasst der UWB-Sensor 110 eine Kommunikationsschnittstelle in Form einer UWB-Antenne 126 zum Senden und Empfangen von Daten mittels UWB. In dem Speicher 124, beispielsweise in einem geschützten Speicherbereich des Speichers 124, ist ein UWB-Datenkodierungsschema 154 gespeichert zum Kodieren und/oder Dekodieren von UWB-Signalen, welche mit einer UWB-Datenkodierung gemäß dem UWB-Datenkodierungsschema kodiert über die Kommunikationsschnittstelle 126 gesendet und/oder empfangen werden. Bei entsprechenden UWB-Signalen handelt es sich beispielsweise um Lokalisierungssignale zum Bestimmen von Positionsdaten von UWB-Token. Ist dem UWB-Sensor 110 beispielsweise nur das UWB-Datenkodierungsschema 154 bekannt, kann es nur UWB-Signale, welche mit diesem UWB-Datenkodierungsschema 154 kodiert sind erkennen. Um UWB-Signale erkennen zu können, welche mit einem anderen UWB-Datenkodierungsschema verschlüsselt sind, müssen die empfangenen Signale einer Mehrzahl von räumlich verteilten UWB-Sensoren 110 miteinander Kombiniert werden. Beispielsweise resultiert ein Ausführen der Programminstruktionen durch den Prozessor 120 in einer solchen Kombination. Ist ein mit einem anderen UWB-Datenkodierungsschema kodiertes UWB-Signal und damit die Anwesenheit eines unbekannten UWB-Tokens erkannt, kann der UWB-Sensoren 110 versuchen mit diesem zu kommunizieren. Beispielsweise kann das verwendete andere UWB-Datenkodierungsschema bestimmt und für eine weitere Kommunikation zwischen UWB-Sensoren 110 und UWB-Token verwendet werden.

Nach Ausführungsformen kann die Kommunikationsschnittstelle 126 des UWB-Sensors 110 ferner für eine zusätzliche kabellose, UWB-lose Kommunikation konfiguriert sein, wie etwa Bluetooth, WLAN, WiFi oder GSM. Daten werden unter Verwendung der zusätzlichen Kommunikation beispielsweise mit einem kryptographischen Schlüssel, etwa einem symmetrischen Schlüssel und/oder einem privaten oder öffentlichen Schlüssel eines asymmetrischen Schlüsselpaars, verschlüsselt übertragen. Beispielsweise wird unter Verwendung des kryptographischen Schlüssels eine Ende-zu-Ende-Verschlüsselung zwischen dem UBW-Sensor 110 und einem UWB-Token aufgebaut. Der kryptographischen Schlüssel wird beispielweise über einen UWB-Kommunikationskanal bereitgestellt, d.h. beispielsweise an den und/oder von dem UWB-Token 110 gesendet. Der kryptographische Schlüssel wird bzw. ist beispielsweise in dem Speicher 124 des UWB-Sensors 110 gespeichert, insbesondere in einem geschützten Speicherbereich des Speichers 124.

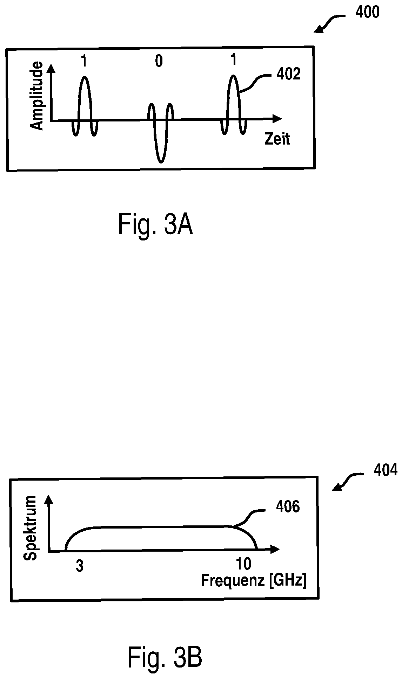

Figuren 3A und 3B zeigen exemplarische UWB-Signale in der Zeitdomäne bzw. in der Frequenzdomäne. Figur 3A zeigt ein schematisches Diagramm eines UWB-Signals, beispielsweise "1 0 1", durch Erzeugung von Impulsen 402 mit einer möglichst kurzen Pulsdauer in der Zeitdomäne 400. Den Gesetzen der Fourier-Transformation entsprechend ist das in Figur 3B gezeigte Spektrum 406, welches über die UWB-Antenne abgestrahlt bzw. empfangen wird, in der Frequenzdomäne 404 umso größer bzw. breiter, je kürzer die Pulsdauer der Impulse 402 ist. Dabei ist das Produkt aus zeitlicher und spektraler Breite des Impulses konstant. Bei der Übertragung des UWB-Signals wird die gesamte Sendeleistung auf einen so großen Frequenzbereich verteilt, dass für den Funkbetrieb schmalbandiger Übertragungsverfahren keine Störungen zu erwarten sind. Mithin ist es nicht oder nur schwer erkennbar, dass überhaupt eine Übertragung mit UWB stattfindet. Für einen schmalbandigen Empfänger erscheint ein UWB-Signal vielmehr wie ein statistisches Rauschen.

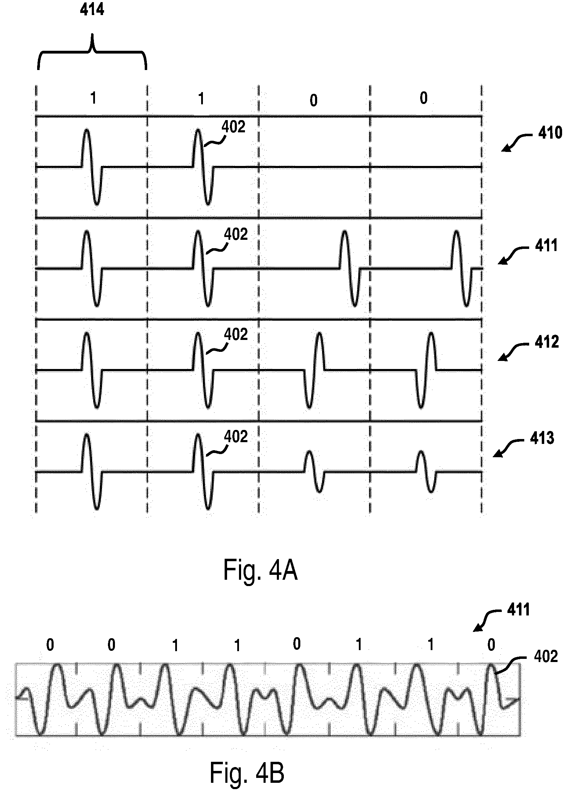

Figur 4A zeigt exemplarische UWB-Datenkodierungen. Es sind vier beispielhafte, identische Zeitintervalle 414 gezeigt. Kodiert werden sollen die Daten "1 1 0 0". In der ersten Zeile 410 wird eine exemplarische UWB-Datenkodierung gemäß einem UWB-Datenkodierungsschema gezeigt, welches auf einem ON-OFF Keying als Kodierungsverfahren beruht. Ein Impulse 402 innerhalb eines der Zeitintervalls 414 ist eine "1", kein Impuls innerhalb eines Zeitintervalls 414 ist eine "0". In der zweiten Zeile 411 wird eine exemplarische UWB-Datenkodierung gemäß einem UWB-Datenkodierungsschema gezeigt, welches auf einem Pulse Position Modulation (PPM) als Kodierungsverfahren beruht. Ein Impulse 402 innerhalb eines der Zeitintervalls 414 an einer ersten Position ist eine "1", ein Impuls 402 innerhalb eines Zeitintervalls 414 an einer relative zur ersten Position verschobenen zweite Position ist eine "0". In der dritten Zeile 412 wird eine exemplarische UWB-Datenkodierung gemäß einem UWB-Datenkodierungsschema gezeigt, welches auf einem Binary Phase Shift Keying (BSPK) als Kodierungsverfahren beruht. Ein Impulse 402 innerhalb eines der Zeitintervalls 414 mit einer ersten Polarität ist eine "1", ein Impuls 402 innerhalb eines Zeitintervalls 414 mit einer relative zur ersten Polarität gespiegelten Polarität ist eine "0". In der vierten Zeile 413 wird eine exemplarische UWB-Datenkodierung gemäß einem UWB-Datenkodierungsschema gezeigt, welches auf einem Pulse Amplitude Modulation (PAM) als Kodierungsverfahren beruht. Ein Impulse 402 innerhalb eines der Zeitintervalls 414 mit einer ersten Amplitude ist eine "1", ein Impuls 402 innerhalb eines Zeitintervalls 414 mit einer von der ersten Amplitude verschiedenen, beispielsweise kleineren, zweiten Amplitude ist eine "0". Die in der Figur 4A gezeigten Nutzsignale kommen an räumlich verteilten UWB-Lokalisierungssensoren zeitversetzt an. Werden diese ankommenden Nutzsignale unter Verwendung einer diese zeitliche Verschiebung kompensierenden Verschiebung kombiniert, überlagern und verstärken sie sich.

Wie in Figur 4B gezeigt können die Impulse 402 im Falle einer Verwendung von Binary Phase Shift Keying (BSPK) als Kodierungsverfahren fortlaufend als kontinuierlicher Strom gesendet werden. Dadurch kann die übertragene Bitrate gleich der Impulsrate sein.

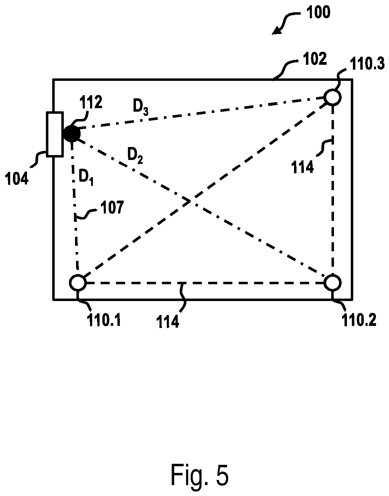

Figur 5 zeigt ein exemplarisches UWB-Kommunikationssystem 100, welches eine Mehrzahl von UWB-Sensoren 110.1, 110.2, 110.3 umfasst. Die UWB-Sensoren 110.1, 110.2, 110.3 weisen jeweils eine andere Entfernung $D_1$, $D_2$, $D_3$ zu dem Zugang 104 zu dem räumlichen Bereich 102 auf. Ein von dem UWB-Token 112 beim Passieren des Zugangs 104 gesendetes UWB-Signal trifft zum Zeitpunkt T1 bei dem ersten UWB-Sensoren 110.1 ein. Bei dem zweiten UWB-Sensoren 110.2 trifft das UWB-Signal mit einer relativen zeitlichen Verschiebung $\Delta_2 = T_2 - T_1$ ein. Bei dem dritten UWB-Sensoren 110.3 trifft das UWB-Signal mit einer relativen zeitlichen Verschiebung $\Delta_3 = T_3 - T_1$ ein. Werden beim Kombinieren der von den UWB-Sensoren 110.1, 110.2, 110.3 erfassten Sensorsignale zum Kompensieren dieser entfernungsabhängigen zeitlichen Verschiebungen inverse zeitliche Verschiebungen $-\Delta_2$ und $-\Delta_3$ für die von dem zweiten UWB-Sensoren 110.2 und dem dritten UWB-Sensoren 110.3 erfassten Sensorsignale verswendet, kann das UWB-Signal effektiv verstärkt werden.

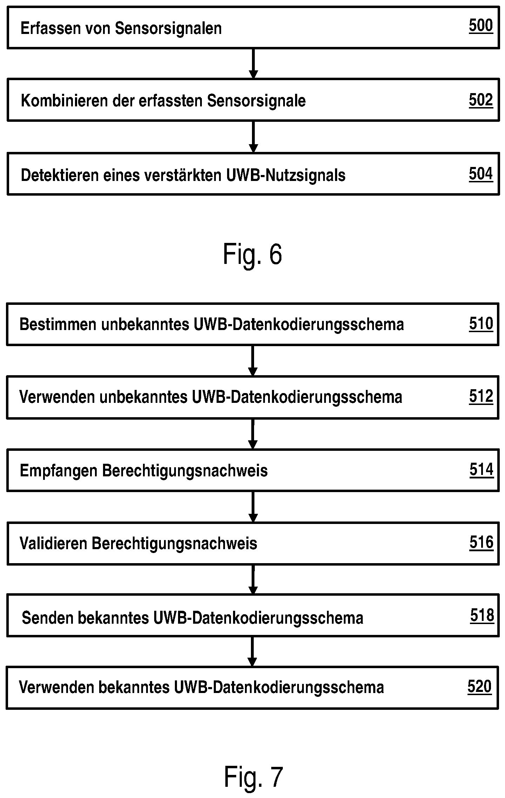

Figur 6 zeigt ein exemplarisches Verfahren zum Betreiben eines UWB-Überwachungssystem 100 zur Überwachung eines räumlichen Bereiches 102. In Block 502 wird eine Mehrzahl von Sensorsignalen durch die räumlich verteilte Mehrzahl von Lokalisierungssensoren erfasst. Die erfassten Sensorsignale umfassen jeweils ein Rauschsignal und ein von dem unbekannten UWB-Token gesendetes unbekanntes UWB-Nutzsignal, mit welchem das Rauschsignal überlagert ist. Das trifft Nutzsignal infolge der räumlichen Verteilung der Lokalisierungssensoren jeweils mit einer sensorabhängigen ersten zeitlichen Verschiebung in den von den individuellen Lokalisierungssensoren erfassten Signalen auf. In Block 504 wird das unbekannte UWB-Nutzsignals relativ zu dem Rauschsignal verstärkt. Das Verstärken umfasst ein Kombinieren der erfassten Sensorsignale miteinander. Die erfassten Sensorsignale werden zum Kombinieren jeweils unter Verwendung einer sensorabhängigen zweiten zeitlichen Verschiebung zeitlich verschoben. Die verwendeten zweiten zeitlichen Verschiebungen der erfassten Sensorsignale sind jeweils invers zu der ersten zeitlichen Verschiebung des entsprechenden Sensorsignals und kompensieren die entsprechende erste zeitliche Verschiebung. In Block 506 wird das verstärkte unbekannte UWB-Nutzsignal unter Verwendung der kombinierten Sensorsignale detektiert.

Figur 7 zeigt ein exemplarisches Verfahren zum Betreiben eines UWB-Überwachungssystem 100 zur Überwachung eines räumlichen Bereiches 102 In Block 510 wird unter Verwendung des detektierten unbekannten UWB-Nutzsignals ein unbekanntes UWB-Datenkodierungsschema, mit welchem das detektierte unbekannte UWB-Nutzsignal kodiert ist, bestimmt und in Block 512 zum Kodieren einer UWB-Kommunikation zwischen UWB-Überwachungssystem und unbekanntem UWB-Token verwendet. In Block 514 wird ein Berechtigungsnachweis des unbekannten UWB-Tokens empfangen und in Block 516 validiert. Falls der Berechtigungsnachweis gültig ist, wird in Block 518 ein dem UWB-Überwachungssystem bekanntes und von diesem verwendetes UWB-Datenkodierungsschema mittels der in Block 514 aufgebauten UWB-Kommunikation an das bis dato unbekannte UWB-Token gesendet. In Block 520 wird das in Block 518 gesendete bekannte UWB-Datenkodierungsschema zum Kodieren einer UWB-Kommunikation zwischen UWB-Überwachungssystem und UWB-Token verwendet.

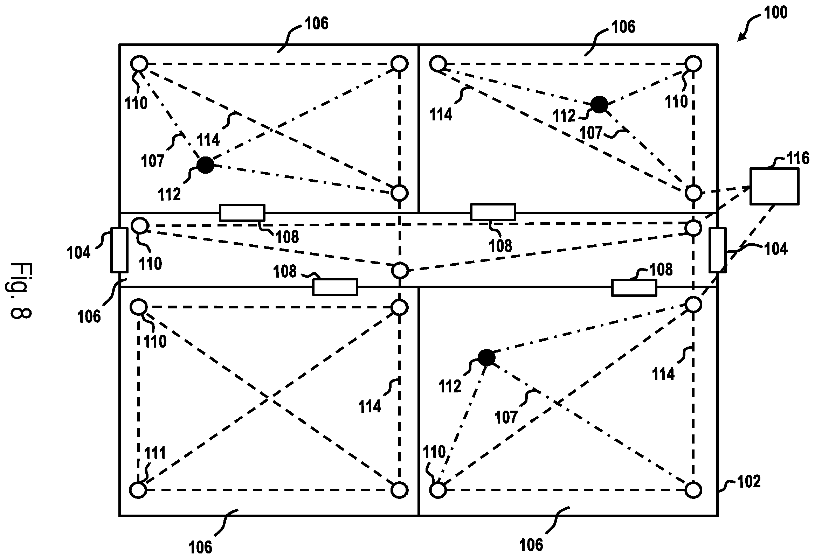

Figur 8 zeigt ein exemplarisches UWB-Überwachungssystem 100 zur Überwachung eines räumlichen Bereiches 102, etwa eines zugangsbeschränkten räumlichen Bereiches. Handelt es sich bei dem räumlichen Bereich 102 um einen zugangsbeschränkten räumlichen Bereich, ist dieser zugangsbeschränkte räumliche Bereich beispielsweise gegenüber der Umgebung abgegrenzt und bestimmungsgemäß nur über ein oder mehrere Ein- bzw. Ausgänge 104 betretbar. Beispielsweise handelt es sich bei dem räumlichen Bereich um einen Indoor-Bereich bzw. Innenbereich innerhalb eines Gebäudes. Alternativ oder zusätzlich kann der räumliche Bereich auch einen Outdoor-Bereich bzw. Außenbereich außerhalb eines Gebäudes umfassen. Beispielsweise kann dieser Outdoor-Bereich ein zugangsbeschränkter Bereich sein, welcher eingefriedet ist. Eine Einfriedung kann beispielsweise einen Zaun, eine Mauer und/oder eine Hecke umfassen. Ein zugangsbeschränkte räumliche Bereich 102 kann beispielsweise in eine Mehrzahl räumlicher Abschnitte 106 unterteilt sein, welche selbst jeweils bestimmungsgemäß nur über ein oder mehrere Ein- bzw. Ausgänge 108 betretbar sind.

Das UWB-Überwachungssystem 100 umfasst eine Mehrzahl von über den räumlichen Bereich 102 verteilten UWB-Sensoren 110. Die UWB-Sensoren 110 sind für ein Erfassen von Sensordaten, wie etwa Positionsdaten, Bewegungsdaten, Bilddaten, Tondaten, Vibrationsdaten, Temperaturdaten, Strukturdaten, Gaskonzentrationsdaten, Partikelkonzentrationsdaten etc. konfiguriert. Ferner sind die UWB-Sensoren 110 für ein Übertragen der erfassten Sensordaten mittels UWB, d.h. über ein von dem UWB-Überwachungssystem 100 bereitgestellten UWB-Netzwerk, konfiguriert. Hierbei können die UWB-Sensoren 110 als UWB-Transceiver zum Weiterleiten von UWB-Übertragungssignalen innerhalb des Überwachungssystem 100 konfiguriert. Ferner kann das UWB-Überwachungssystem 100 zusätzlich zu den UWB-Sensoren 110 ein oder mehrere UWB-Transceiver 111 umfassen, welche zum Weiterleiten der UWB-Übertragungssignale konfiguriert sind. Das von dem Überwachungssystem 100 implementierte UWB-Netzwerk ist beispielsweise ein digitales Funknetzwerk mit einer Mesh-Topologie, welches zum Übertragen der erfassten Sensordaten unter Verwendung von UWB konfiguriert ist. Beispielsweise erfolgt eine Übertragung von Sensordaten innerhalb des UWB-basierten Funknetzwerks mit Mesh-Topologie unter Verwendung eines positionsbasierten Routingverfahrens. Nach Ausführungsformen erfolgt eine Datenübertragung der UWB-Sensoren 110 ausschließlich mittels UWB. Nach Ausführungsformen sind ein oder mehrere der UWB-Sensoren 110 zusätzlich für eine zumindest teilweise und/oder vollständig kabelgebundene Übertragen der erfassten Sensordaten konfiguriert. Nach Ausführungsformen sind alle UWB-Sensoren 110 zusätzlich für eine zumindest teilweise und/oder vollständig kabelgebundene Übertragen der erfassten Sensordaten konfiguriert. Beispielsweise kann auch eine UWB-Radarfunktionalität für die Detektion von Personen eingebunden und/oder implementiert werden, welche keinen UWB-Token tragen.

Die UWB-Sensoren 110 umfassen beispielsweise Anonymisierungsfilter, welche dazu konfiguriert sind, die erfassten Sensordaten zu filtern. Im Zuge des Filterns werden personenbezogene Sensordaten anonymisiert. Personenbezogene Sensordaten umfassen beispielsweise Bilddaten, auf welche Personen identifizierbar sind. Die gefilterten Sensordaten werden beispielweise über das UWB-Netzwerk an ein Steuermodul 116 übertragen. Bei dem Steuermodul 116 kann es sich um ein zentrales Steuermodul oder ein dezentrales Steuermodul handeln. Das Steuermodul 116 ist beispielsweise dazu konfiguriert die von den UWB-Sensoren 110 erfassten Sensordaten auszuwerten zum Detektieren von Ausnahmeereignissen, wie etwa einer Gefahrensituation oder einem unberechtigten Zutritt zu dem räumlichen Bereich 102. Auf das Detektieren eines Ausnahmeereignisses hin, wird das Anonymisierens der personenbezogene Sensordaten zeitlich begrenzt ausgesetzt.

Das Steuermodul 116 ist beispielsweise ferner dazu konfiguriert Anfragen nach erfassten Sensordaten zu empfangen, Berechtigungsnachweise zum Zugriff auf die entsprechenden Sensordaten zu prüfen und im Falle einer erfolgreichen Prüfung Zugriff auf die angefragten Sensordaten zu gewähren. Im Falle eines detektierten Ausnahmeereignisses wird beispielsweise auch ein Zugriff auf personenbezogene Sensordaten gewährt, deren Anonymisierung vorübergehend ausgesetzt ist. Die Berechtigungsnachweise können beispielsweise auf Berechtigungszertifikaten und/oder Berechtigungsprofilen der Anfragenden basieren, welche Zugriffsberechtigungen der Anfragenden definieren. In einem Nutzer und/oder UWB-Token zugeordneten Berechtigungsprofil sind beispielsweise sämtliche einem und/oder UWB-Token zugeordneten Zugriffsberechtigungen gespeichert. Der Umfang der gewährten Zugriffsberechtigung kann nach Ausführungsformen beispielsweise davon abhängen, ob eine Ausnahmesituation detektiert wird.

Das Überwachungssystem 100 kann ferner dazu konfiguriert sein unter Verwendung von UWB-Sensoren UWB-Token 112 innerhalb des räumlichen Bereiches 102 zu lokalisieren. Hierzu werden beispielsweise UBW-Lokalisierungssignale 107 verwendet, welche von den UWB-Antennen 110 an die entsprechenden UWB-Token 112 gesendet werden und umgekehrt. Anhand von Laufzeitunterschieden der übertragenen Signale können beispielsweise mittels Triangulation die relativen Positionen der UBW-Token 112 zu den festinstallierten UWB-Antennen 110 und somit die Positionen der UBW-Token 112 in dem räumlichen Bereich 102 präzise bestimmt werden. Da die übertragenen UBW-Lokalisierungssignale 107 ohne Kenntnis der verwendeten UWB-Kodierung kaum von Hintergrundrauschen zu unterscheiden sind und somit effektiv obfuskiert werden, können Versuche einer unberechtigten Lokalisierung der UWB-Token 112 im Zuge von unerlaubten Ausspähversuchen effektiv verhindert werden. Dies wird zusätzlich unterstützt durch die verhältnismäßig kurze Reichweite der UWB-Signale, welche Ausspähversuche aus der Ferne effektiv kontern. Die UWB-Token 112 kennzeichnen beispielsweise Nutzer bzw. Träger mit Zugangsberechtigung zu dem räumlichen Bereich 102, falls es sich bei diesem um einen zugangsbeschränkten räumlichen Bereich handelt. Ferner können die UWB-Token 112 trägerspezifische Zugangsberechtigungen definieren, falls für einzelne räumliche Abschnitte des räumlichen Bereiches 102 unterschiedliche Zugangsberechtigungen notwendig sind. Anhand der UWB-Token 112 kann somit bestimmt werden, wo sich zugangsberechtigte Personen aufhalten. Falls Personen detektiert werden, welchen kein UWB-Token 112 zugeordnet werden kann, ist dies ein Hinweis auf einen Versuch eines unberechtigten Eindringens, welcher beispielsweise als ein Ausnahmeereignis detektiert wird.

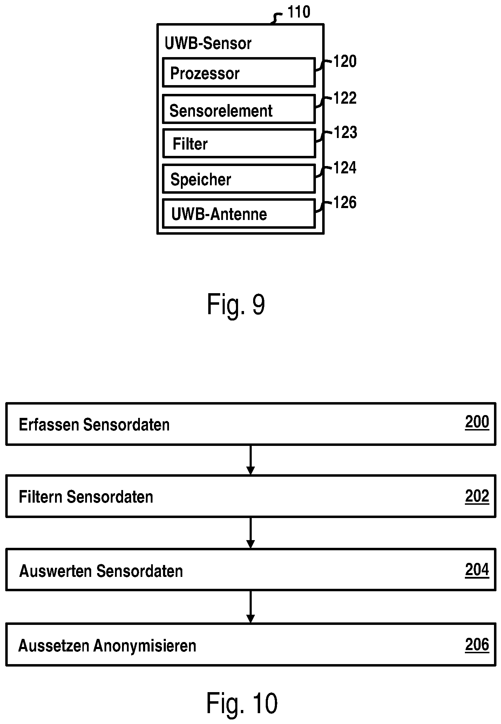

Figur 9 zeigt einen exemplarischen UBW-Sensor 110. Beispielsweise umfasst der UBW-Sensor alle Merkmale des UWB-Sensors der Figur 2. Der UBW-Sensor 110 umfasst ferner ein Sensorelement 122, welches beispielsweise zum Erfassen optischer, akustischer, chemischer, thermischer, elektromagnetischer und/oder vibrationsbasierter Sensordaten konfiguriert ist. Die erfassten Sensordaten können beispielsweise in Abhängigkeit des verwendeten Sensorelements 122 personenbezogene Sensordaten umfassen. Falls der UWB-Sensor 110 zum Erfassen personenbezogene Sensordaten konfiguriert ist, umfasst der UWB-Sensor 110 ferner einen Anonymisierungsfilter zum Anonymisieren der personenbezogene Sensordaten, andernfalls nicht. Das Anonymisieren kann beispielsweise ein Löschen der erfassten personenbezogene Sensordaten von dem Speicher 124 umfassen. Ferner kann das Anonymisieren beispielsweise ein Verschlüsseln der erfassten personenbezogene Sensordaten umfassen. Schließlich umfasst der UWB-Sensor 110 eine UWB-Antenne 126 zum Senden und Empfangen von Daten mittels UWB. Nach Ausführungsformen kann der UWB-Sensor 110 beispielsweise zusätzlich eine Kommunikationsschnittstelle für eine kabelgebundene Datenübertragung umfassen.

Figur 10 zeigt ein exemplarisches Verfahren zum Steuern eines UWB-Überwachungssystems. In Block 200 werden Sensordaten in einem räumlichen Bereich durch UWB-Sensoren des UWB-Überwachungssystems erfasst. Die erfassten Sensordaten können personenbezogene Sensordaten umfassen. In Block 202 werden die erfassten Sensordaten unter Verwendung von Anonymisierungsfiltern der UWB-Sensoren gefiltert. Dabei werden personenbezogene Sensordaten anonymisiert. Ein solches Anonymisieren umfasst beispielsweise ein Löschen oder Verschlüsseln der zu anonymisierenden Sensordaten. In Block 204 werden die erfassten und gefilterten Sensordaten zum Detektieren eines Ausnahmeereignisses ausgewertet. Dies erfolgt beispielsweise durch ein zentrales oder dezentrales Steuermodul des UWB-Überwachungssystems. In Block 206 wird auf ein Detektieren eines Ausnahmeereignisses hin, ein zeitlich begrenztes Aussetzen des Anonymisierens der personenbezogene Sensordaten beispielsweise durch das Steuermodul veranlasst.

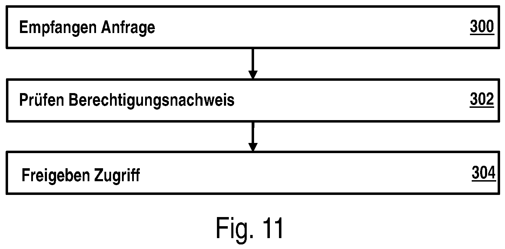

Figur 11 zeigt ein exemplarisches Verfahren zum Steuern eines UWB-Überwachungssystems. In Block 300 empfängt das UWB-Überwachungssystem, beispielsweise ein Steuermodul des UWB-Überwachungssystems, eine Anfrage zum Freigeben von erfassten Sensordaten. In Block 302 wird, beispielsweise durch das Steuermodul, eine von der Anfrage umfasster Berechtigungsnachweis zum Zugriff auf die angefragte Sensordaten geprüft. Bei dem Berechtigungsnachweis kann es sich beispielsweise um ein Berechtigungszertifikat handeln oder um einen Identifikator eines hinterlegten Berechtigungsprofils des Anfragenden. In Block 304 wird auf eine erfolgreiche Prüfung des Berechtigungsnachweises hin, ein Zugriff auf die angefragten Sensordaten freigegeben. Beispielsweise werden die angefragten Sensordaten an den Anfragenden gesendet oder auf einer lokalen Anzeigevorrichtung des Überwachungssystems angezeigt.

Bezugszeichenliste

| 100 | UWB-Überwachungssystem |
| 102 | räumlicher Bereich |
| 104 | Zugang/Ausgang |
| 106 | räumlicher Abschnitt |
| 108 | Zugang/Ausgang |
| 107 | UWB-Lokalisierungssignal |
| 110 | UWB-Sensor |
| 111 | UWB-Transceiver |
| 112 | UWB-Token |
| 114 | UWB-Kommunikationskanal |
| 116 | Steuermodul |
| 120 | Prozessor |
| 122 | Sensorelement |
| 123 | Filter |
| 124 | Speicher |
| 126 | Kommunikationsschnittstelle |
| 130 | Prozessor |
| 132 | Speicher |
| 134 | Kommunikationsschnittstelle |
| 152 | UWB-Datenkodierungsschema |
| 154 | UWB-Datenkodierungsschema |
| 400 | Zeitdomäne |
| 402 | Impuls |
| 404 | Frequenzdomäne |
| 406 | Spektrum |
| 410 | ON-OFF Keying |
| 411 | Pulse Position Modulation |
| 412 | Binary Phase Shift Keying |
| 413 | Pulse Amplitude Modulation |
| 414 | Zeitintervall |

**Patentansprüche**

1.  UWB-Überwachungssystem (100) zur Überwachung eines räumlichen Bereiches (102), wobei das UWB-Überwachungssystem (100) eine Mehrzahl von UWB-Sensoren (110) umfasst, welche in dem räumlichen Bereich (102) verteilt angeordnet sind, wobei die UWB-Sensoren (110) für eine Kommunikation mittels UWB konfiguriert sind,

    wobei die Mehrzahl von UWB-Sensoren (110) eine Mehrzahl von Lokalisierungssensoren zum Bestimmen von Positionsdaten mobiler tragbarer UWB-Token (112) innerhalb des räumlichen Bereiches (102) umfasst, wobei das Bestimmen der Positionsdaten Laufzeitmessungen von UWB-Signalen (107) zwischen den Lokalisierungssensoren und den UWB-Token (112) umfasst,

wobei das UWB-Überwachungssystem (100) konfiguriert ist zum Detektieren einer Anwesenheit eines unbekannten UWB-Tokens (112) in dem räumlichen Bereich (102), wobei das unbekannte UWB-Token (112) ein erstes UWB-Nutzsignal sendet, wobei das gesendete erste UWB-Nutzsignal gemäß einem dem Überwachungssystem (100) unbekannten ersten UWB-Datenkodierungsschema (152) kodiert ist, wobei das Detektieren der Anwesenheit des unbekannten UWB-Tokens (112) umfasst:

- Erfassen einer Mehrzahl von Sensorsignalen durch die räumlich verteilte Mehrzahl von Lokalisierungssensoren, wobei die erfassten Sensorsignale jeweils ein Rauschsignal und ein von dem unbekannten UWB-Token (112) gesendetes erstes UWB-Nutzsignal umfassen, mit welchem das Rauschsignal überlagert ist, wobei das Nutzsignal infolge der räumlichen Verteilung der Lokalisierungssensoren jeweils mit einer sensorabhängigen ersten zeitlichen Verschiebung in den von den individuellen Lokalisierungssensoren erfassten Signalen auftritt,
- Verstärken des ersten UWB-Nutzsignals relativ zu dem Rauschsignal, wobei das Verstärken ein Kombinieren der erfassten Sensorsignale miteinander umfasst, wobei die erfassten Sensorsignale zum Kombinieren jeweils unter Verwendung einer sensorabhängigen zweiten zeitlichen Verschiebung zeitlich verschoben werden, wobei die verwendeten zweiten zeitlichen Verschiebungen der erfassten Sensorsignale jeweils invers zu der ersten zeitlichen Verschiebung des entsprechenden Sensorsignals sind und die entsprechende erste zeitliche Verschiebung kompensieren,
- Detektieren des verstärkten ersten UWB-Nutzsignals unter Verwendung der kombinierten Sensorsignale.

2.  UWB-Überwachungssystem (100) nach Anspruch 1, wobei das Kombinieren der erfassten Sensorsignale ein Addieren der erfassten Sensorsignale unter Verwendung der sensorabhängigen zweiten zeitlichen Verschiebungen umfasst.

3.  UWB-Überwachungssystem (100) nach einem der vorangehenden Ansprüche, wobei das Kombinieren der erfassten Sensorsignale ein Anpassen der sensorabhängigen zweiten zeitlichen Verschiebungen umfasst bis die sensorabhängigen zweitlichen Verschiebungen jeweils die ersten zeitlichen Verschiebungen kompensieren, wobei das Anpassen der einzelnen sensorabhängigen zweiten zeitlichen Verschiebungen beispielsweise sukzessive Sensorsignal für Sensorsignal erfolgt.

4. UWB-Überwachungssystem (100) nach einem der vorangehenden Ansprüche, wobei das Kombinieren der erfassten Sensorsignale sukzessive Sensorsignal für Sensorsignal erfolgt ausgehend von einer Kombination aus zwei ersten Sensorsignalen der Mehrzahl von Sensorsignalen hinzugefügt werden, und/oder

   wobei die sensorabhängigen zweiten zeitlichen Verschiebungen für die einzelnen Sensorsignale in Abhängigkeit von einer Entfernung des jeweiligen Lokalisierungssensor von einem Zugang (104) zu dem räumlichen Bereich (102) in UWB-Signalreichweite von den Lokalisierungssensoren gewählt werden, und/oder
   wobei die sensorabhängigen zweiten zeitlichen Verschiebungen für die einzelnen Sensorsignale in Abhängigkeit von einer Entfernung des jeweiligen Lokalisierungssensor von einem Zugang (108) zu einem vordefinierten räumlichen Abschnitt des räumlichen Bereiches (102) in UWB-Signalreichweite von den Lokalisierungssensoren gewählt werden, und/oder
   wobei die erfassten Sensorsignale ein oder mehrere zweite UWB-Nutzsignalen umfassen, welche gemäß dem Überwachungssystem (100) bekannten zweiten UWB-Datenkodierungsschemata (154) kodiert sind, wobei das Detektieren der Anwesenheit des unbekannten UWB-Tokens (112) ferner umfasst:
   Herausfiltern der zweiten UWB-Nutzsignale aus den erfassten Sensorsignalen.

5. UWB-Überwachungssystem (100) nach einem der vorangehenden Ansprüche, wobei Detektieren der Anwesenheit des unbekannten UWB-Tokens (112) ferner umfasst:
   Bestimmen des dem UWB-Überwachungssystem (100) unbekannten ersten UWB-Datenkodierungsschemas (152) unter Verwendung des detektierten, verstärkten ersten UWB-Nutzsignals.

6. UWB-Überwachungssystem (100) nach Anspruch 5, wobei das UWB-Überwachungssystem (100) konfiguriert ist zum Ausführen einer ersten UWB-Kommunikation mit dem UWB-Token (112), welche gemäß dem bestimmten ersten UWB-Datenkodierungsschema (152) kodiert ist.

7. UWB-Überwachungssystem (100) nach Anspruch 6, wobei das UWB-Überwachungssystem (100) ferner konfiguriert ist zum

   • Empfangen eines Berechtigungsnachweises des UWB-Tokens (112) zum Zugang zu und/oder der Aufenthalt in dem räumlichen Bereich (102),
   • Validieren des empfangenen Berechtigungsnachweises,

wobei das UWB-Überwachungssystem (100) beispielsweise ferner konfiguriert ist,

   • auf ein erfolgreiches Validieren des Berechtigungsnachweises hin, Senden eines der dem UWB-Überwachungssystem (100) bekannten zweiten UWB-Datenkodierungsschemata (154) unter Verwendung der ersten UWB-Kommunikation an das UWB-Token (112),
   • Ausführen einer zweiten UWB-Kommunikation mit dem UWB-Token (112), welche gemäß dem an das UWB-Token (112) gesendeten zweiten UWB-Datenkodierungsschema (154) kodiert ist.

8. UWB-Überwachungssystem (100) nach einem der vorangehenden Ansprüche, wobei die ersten und zweiten UWB-Datenkodierungsschemata (152, 154) eines oder mehrere der folgenden Kodierungsverfahren verwenden: Pulspositionsmodulation, Pulspolaritätsmodulation, Pulsamplitudenmodulation, orthogonale Pulsformmodulation.

9. UWB-Überwachungssystem (100) nach einem der vorangehenden Ansprüche, wobei die Mehrzahl von UWB-Sensoren (110) zusätzlich zu den Lokalisierungssensoren ein oder mehrere zusätzliche UWB-Sensoren umfasst, welche konfiguriert sind zum Erfassen von Sensordaten,
   wobei die ein oder mehreren zusätzlichen UWB-Sensoren Sensoren (122) beispielsweise zum Erfassen optischer, akustischer, chemischer, thermischer, elektromagnetischer und/oder vibrationsbasierter Sensordaten umfassen.

10. UWB-Überwachungssystem (100) nach einem der vorangehenden Ansprüche, wobei die erfassten Sensordaten personenbezogene Sensordaten umfassen und das UWB-Überwachungssystem (100) konfiguriert ist zum

   • Erfassen von Sensordaten in dem räumlichen Bereich (102) unter Verwendung der UWB-Sensoren, wobei die erfassten Sensordaten personenbezogene Sensordaten umfassen,
   • Filtern der erfassten Sensordaten unter Verwendung eines Anonymisierungsfilters (123), wobei der Anonymisierungsfilter dazu konfiguriert ist, die personenbezogenen Sensordaten zu anonymisieren,
• Auswerten der erfassten Sensordaten zum Detektieren eines Ausnahmeereignisses,
• auf das Detektieren des Ausnahmeereignisses hin, zeitlich begrenzten Aussetzen des Anonymisierens der personenbezogene Sensordaten.

11. UWB-Überwachungssystem (100) nach Anspruch 10, wobei es sich bei dem Ausnahmeereignis um ein erfolgreiches Detektieren der Anwesenheit des unbekannten UWB-Tokens (112) handelt oder

    wobei es sich bei dem Ausnahmeereignis um ein Fehlen eines gültigen Berechtigungsnachweises des detektierten unbekannten UWB-Tokens (112) handelt oder
    wobei es sich bei dem Ausnahmeereignis um ein Fehlschlagen der zweiten UWB-Kommunikation mit dem UWB-Token (112) handelt.

12. UWB-Überwachungssystem (100) nach einem der Ansprüche 10 bis 11, wobei das Anonymisieren durch den Anonymisierungsfilter (123) ein Löschen zumindest eines Teils der personenbezogenen Sensordaten umfasst, wobei das zeitlich begrenzte Aussetzen des Anonymisierens ein Speichern der personenbezogener Sensordaten umfasst, welche innerhalb eines begrenzten Zeitfensters erfasst werden.

13. UWB-Überwachungssystem (100) nach Anspruch 12, wobei das begrenzte Zeitfenster mit dem Detektieren des Ausnahmeereignisses beginnt und mit Ablauf einer vorbestimmten Zeitspanne oder einem Enden des Detektierens des Ausnahmeereignisses endet und/oder
    wobei das Löschen der personenbezogenen Sensordaten jeweils durch den die zu löschenden personenbezogenen Sensordaten erfassenden UWB-Sensor erfolgt, wobei das Speichern der personenbezogenen Sensordaten jeweils ein Übertragen der personenbezogenen Sensordaten durch den die zu speichernden personenbezogenen Sensordaten erfassenden UWB-Sensor mittels UWB an ein Speichermodul des UWB-Überwachungssystems (100) umfasst.

14. UWB-Überwachungssystem (100) nach einem der Ansprüche 10 bis 13, wobei das Anonymisieren durch den Anonymisierungsfilter (123) ein Verschlüsseln zumindest eines Teils der personenbezogenen Sensordaten umfasst, wobei das zeitlich begrenzte Aussetzen des Anonymisierens ein zeitlich begrenztes Bereitstellen der entsprechenden personenbezogenen Sensordaten in unverschlüsselter Form umfasst, und/oder
    wobei das UWB-Überwachungssystem (100) ferner konfiguriert ist zum

    • Empfangen einer Anfrage zum Freigeben von erfassten Sensordaten,
    • Prüfen eines von der Anfrage umfassten Berechtigungsnachweises zum Zugriff auf die angefragte Sensordaten,
    • auf eine erfolgreiche Prüfung des Berechtigungsnachweises hin, Freigeben des Zugriffs auf die angefragten Sensordaten.

15. Verfahren zum Steuern eines UWB-Überwachungssystems (100) zur Überwachung eines räumlichen Bereiches (102), wobei das UWB-Überwachungssystem (100) eine Mehrzahl von UWB-Sensoren (110) umfasst, welche in dem räumlichen Bereich (102) verteilt angeordnet sind, wobei die UWB-Sensoren (110) für eine Kommunikation mittels UWB konfiguriert sind,

    wobei die Mehrzahl von UWB-Sensoren (110) eine Mehrzahl von Lokalisierungssensoren zum Bestimmen von Positionsdaten mobiler tragbarer UWB-Token (112) innerhalb des räumlichen Bereiches (102) umfasst, wobei das Bestimmen der Positionsdaten Laufzeitmessungen von UWB-Signalen (107) zwischen den Lokalisierungssensoren und den UWB-Token (112) umfasst,
    wobei das UWB-Überwachungssystem (100) konfiguriert ist zum Detektieren einer Anwesenheit eines unbekannten UWB-Tokens (112) in dem räumlichen Bereich (102), wobei der unbekannte UWB-Token (112) ein erstes UWB-Nutzsignal sendet, wobei das gesendete erste UWB-Nutzsignal gemäß einem dem Überwachungssystem (100) unbekannten ersten UWB-Datenkodierungsschema (152) kodiert ist,
    wobei das Verfahren umfasst zum Detektieren der Anwesenheit des unbekannten UWB-Tokens (112):

        • Erfassen einer Mehrzahl von Sensorsignalen durch die räumlich verteilte Mehrzahl von Lokalisierungssensoren, wobei die erfassten Sensorsignale jeweils ein Rauschsignal und ein von dem unbekannten UWB-Token (112) gesendetes erstes UWB-Nutzsignal umfassen, mit welchem das Rauschsignal überlagert ist, wobei das Nutzsignal infolge der räumlichen Verteilung der Lokalisierungssensoren jeweils mit einer sensorabhängigen ersten zeitlichen Verschiebung in den von den individuellen Lokalisierungssensoren erfassten Signalen auftritt,
        • Verstärken des ersten UWB-Nutzsignals relativ zu dem Rauschsignal, wobei das Verstärken ein Kombinieren der erfassten Sensorsignale miteinander umfasst, wobei die erfassten Sensorsignale zum Kombinieren jeweils unter Verwendung einer sensorabhängigen zweiten zeitlichen Verschiebung zeitlich verschoben werden,

wobei die verwendeten zweiten zeitlichen Verschiebungen der erfassten Sensorsignale jeweils invers zu der ersten zeitlichen Verschiebung des entsprechenden Sensorsignals sind und die entsprechende erste zeitliche Verschiebung kompensieren,
• Detektieren des verstärkten ersten UWB-Nutzsignals unter Verwendung der kombinierten Sensorsignale.

## Claims

1. A UWB monitoring system (100) for monitoring a spatial area (102), wherein the UWB monitoring system (100) comprises a plurality of UWB sensors (110), which are arranged distributed in the spatial area (102), wherein the UWB sensors (110) are configured for communication by means of UWB,

wherein the plurality of UWB sensors (110) comprises a plurality of localization sensors for determining positional data of mobile portable UWB tokens (112) within the spatial area (102), wherein determining the positional data includes time-of-flight measurements of UWB signals (107) between the localization sensors and the UWB tokens (112),
wherein the UWB monitoring system (100) is configured for detecting a presence of an unknown UWB token (112) in the spatial area (102), wherein the unknown UWB token (112) sends a first UWB useful signal, wherein the sent first UWB useful signal is encoded according to a first UWB data encoding scheme (152) unknown to the monitoring system (100), wherein detecting the presence of the unknown UWB token (112) comprises:

• detecting a plurality of sensor signals by way of the spatially distributed plurality of localization sensors, wherein the detected sensor signals respectively comprise a noise signal and a first UWB useful signal sent by the unknown UWB token (112) with which the noise signal is superimposed, wherein the useful signal, due to the spatial distribution of the localization sensors, appears with a sensor-dependent first time shift in the signals detected by the individual localization sensors,
• amplifying the first UWB useful signal relative to the noise signal, wherein the amplification comprises combining the detected sensor signals with one another, wherein the detected sensor signals are shifted in time for combination respectively using a sensor-dependent second time shift,
wherein the utilized second time shifts of the detected sensor signals are each inverse to the first time shift of the corresponding sensor signal and compensate for the corresponding first time shift,
• detecting the amplified first UWB useful signal using the combined sensor signals.

2. The UWB monitoring system (100) according to claim 1, wherein combining the detected sensor signals comprises adding the detected sensor signals using the sensor-dependent second time shifts.

3. The UWB monitoring system (100) according to any one of the preceding claims, wherein combining the detected sensor signals comprises adjusting the sensor-dependent second time shifts until the sensor-dependent second time shifts respectively compensate for the first time shifts, wherein the adjustment of the individual sensor-dependent second time shifts is carried out for example successively sensor signal by sensor signal.

4. The UWB monitoring system (100) according to any one of the preceding claims, wherein combining the detected sensor signals is performed successively sensor signal by sensor signal based on a combination of two first sensor signals of the plurality of sensor signals, and/or

wherein the sensor-dependent second time shifts for the individual sensor signals are selected as a function of the distance of the respective localization sensor from an access point (104) to the spatial area (102) in UWB signal range of the localization sensors, and/or wherein the sensor-dependent second time shifts for the individual sensor signals are selected as a function of a distance of the respective localization sensor from an access (108) to a predefined spatial section of the spatial area (102) within UWB signal range of the localization sensors and/or wherein the detected sensor signals comprise one or more second UWB useful signals, which are encoded according to the second UWB data encoding scheme (154) known to the monitoring system (100), wherein detecting the presence of the unknown UWB token (112) further comprises:
filtering the second UWB useful signal out from the detected sensor signals.

5. The UWB monitoring system (100) according to any one of the preceding claims, wherein detecting the presence of the unknown UWB token (112) further comprises:
determining the first UWB data encoding scheme (152) unknown to the UWB monitoring system (100) using the detected, amplified first UWB useful signal.

6. The UWB monitoring system (100) according to claim 5, wherein the UWB monitoring system (100) is configured for executing a first UWB communication with the UWB token (112), which is encoded according to the determined first UWB data encoding scheme (152).

7. The UWB monitoring system (100) according to claim 6, wherein the UWB- monitoring system (100) is further configured:

   • to receive a proof of authorization of the UWB token (112) for access to and/or entering the spatial area (102),
   • to validate the received proof of authorization,

   wherein the UWB monitoring system (100) is further configured for example,

   • after successfully validating the proof of authorization, to send one of the second UWB data encoding schemes (154) known to the UWB monitoring system (100) to the UWB token (112) using the first UWB communication,
   • performing a second UWB communication with the UWB token (112), which is encoded according to the second UWB data encoding scheme (154) sent to the UWB token.

8. The UWB monitoring system (100) according to any one of the preceding claims, wherein the first and second UWB data encoding schemes (152, 154) use one or more of the following encoding methods: pulse position modulation, pulse polarity modulation, pulse amplitude modulation, orthogonal pulse shape modulation.

9. The UWB monitoring system (100) according to any one of the preceding claims, wherein the plurality of UWB sensors (110) comprises, in addition to the localization sensors one or more additional UWB sensors, which are configured to acquire sensor data,
wherein the one or more additional UWB sensors comprise(s) sensors (122) for detecting optical, acoustic, chemical, thermal, electromagnetic and/or vibration-based sensor data for example.

10. The UWB monitoring system (100) according to any one of the preceding claims, wherein the detected sensor data comprise personal sensor data and the UWB monitoring system (100) is configured for

   • detecting sensor data in the spatial area (102) using the UWB sensors, wherein the detected sensor data comprise personal sensor data,
   • filtering the detected sensor data using an anonymization filter (123), wherein the anonymization filter is configured to anonymize the personal sensor data,
   • evaluating the detected sensor data for detecting an exceptional event,
   • on detecting the exceptional event, temporarily suspending the anonymization of the personal sensor data.

11. The UWB monitoring system (100) according to claim 10, wherein the exceptional event is a successful detection of the presence of the unknown UWB token (112) or

   wherein the exceptional event is a failure of a valid proof of authorization of the detected unknown UWB token (112) or
   wherein the exceptional event is a failure of the second UWB communication with the UWB token (112).

12. The UWB monitoring system (100) according to any one of the claims 10 to 11, wherein the anonymization by the anonymization filter (123) comprises deleting at least a portion of the personal sensor data, wherein the time-limited suspension of the anonymization comprises storing the personal sensor data detected within a limited time window.

13. The UWB monitoring system (100) according to claim 12, wherein the limited time window begins with the detection of the exceptional event and ends with the expiry of a predetermined time period or an end of the detection of the exceptional event and/or wherein the deletion of the personal sensor data is carried out by the UWB sensor detecting the personal sensor data to be deleted, wherein the storage of the personal sensor data comprises transmitting the personal sensor data by the UWB sensor detecting the personal sensor data to be stored by means of UWB to a storage module of the UWB monitoring system (100).

14. The UWB monitoring system (100) according to any one of the claims 10 to 13, wherein the anonymization by the anonymization filter (123) comprises encrypting at least a portion of the personal sensor data, wherein the time limited suspension of the anonymization comprises a time limited provision of the corresponding personal sensor data in unencrypted form and/or
wherein the UWB monitoring system (100) is further configured:

- to receive a request to share detected sensor data,
- to verify a proof of authorization in the request for access to the requested sensor data,
- on successful verification of the proof of authorization, enabling access to the requested sensor data.

15. A method for controlling a UWB monitoring system (100) for monitoring a spatial area (102), wherein the UWB monitoring system (100) comprises a plurality of UWB sensors (110), which are arranged distributed in the spatial area (102), wherein the UWB sensors (110) are configured for communication by means of UWB,

wherein the plurality of UWB sensors (110) comprises a plurality of localization sensors for determining positional data of mobile portable UWB tokens (112) within the spatial area (102), wherein determining the positional data comprises time-of-flight measurements of UWB signals (107) between the localization sensors and the UWB tokens (112),
wherein the UWB monitoring system (100) is configured for detecting a presence of an unknown UWB token (112) in the spatial area (102), wherein the unknown UWB token (112) sends a first UWB useful signal, wherein the sent first UWB useful signal is encoded according to a first UWB data encoding scheme (152) unknown to the monitoring system (100),
wherein the method for detecting the presence of the unknown UWB token (112) comprises:

- detecting a plurality of sensor signals by way of the spatially distributed plurality of localization sensors, wherein the detected sensor signals respectively comprise a noise signal and a first UWB useful signal sent by the unknown UWB token (112) with which the noise signal is superimposed, wherein the useful signal, due to the spatial distribution of the localization sensors, appears with a sensor-dependent first time shift in the signals detected by the individual localization sensors,
- amplifying the first UWB useful signal relative to the noise signal, wherein the amplification comprises combining the detected sensor signals with one another, wherein the detected sensor signals are shifted in time for combination respectively using a sensor-dependent second time shift,
wherein the utilized second time shifts of the detected sensor signals are each inverse to the first time shift of the corresponding sensor signal and compensate for the corresponding first time shift,
- detecting the amplified first UWB useful signal using the combined sensor signals.

**Revendications**

1. Système de surveillance UWB (100) destiné à surveiller une zone d'espace (102), dans lequel le système de surveillance UWB (100) comprend une pluralité de capteurs UWB (110), qui sont agencés de manière distribuée dans la zone d'espace (102), dans lequel les capteurs UWB (110) sont configurés pour une communication au moyen d'UWB,

dans lequel la pluralité de capteurs UWB (110) comprend une pluralité de capteurs de localisation destinés à déterminer des données de position de jetons UWB (112) portables mobiles à l'intérieur de la zone d'espace (102), dans lequel l'étape consistant à déterminer les données de position inclut des mesures de temps de vol de signaux UWB (107) entre les capteurs de localisation et les jetons UWB (112),
dans lequel le système de surveillance UWB (100) est configuré pour détecter une présence d'un jeton UWB (112) inconnu dans la zone d'espace (102), dans lequel le jeton UWB (112) inconnu envoie un premier signal UWB utile, dans lequel le premier signal UWB utile envoyé est encodé conformément à un premier schéma d'encodage de données UWB (152) inconnu du système de surveillance (100), dans lequel l'étape consistant à détecter la présence du jeton UWB (112) inconnu comprend les étapes consistant à :

- détecter une pluralité de signaux de capteurs par le biais de la pluralité spatialement distribuée de capteurs de localisation, dans lequel les signaux de capteurs détectés comprennent respectivement un signal de bruit et un premier signal UWB utile envoyé par le jeton UWB (112) inconnu auquel le signal de bruit est superposé, dans lequel le signal utile, du fait de la distribution spatiale des capteurs de localisation, apparaît avec un premier décalage temporel dépendant du capteur dans les signaux détectés par les capteurs de localisation individuels,
- amplifier le premier signal UWB utile par rapport au signal de bruit, dans lequel l'amplification comprend l'étape consistant à combiner les signaux de capteurs détectés les uns aux autres, dans lequel les signaux de capteurs détectés sont décalés dans le temps pour une combinaison utilisant respectivement un second décalage temporel dépendant du capteur,

dans lequel les seconds décalages temporels utilisés des signaux de capteurs détectés sont chacun inversés par rapport au premier décalage temporel du signal de capteur correspondant et compensent le premier décalage temporel correspondant,
• détecter le premier signal UWB utile amplifié en utilisant les signaux des capteurs combinés.

2. Système de surveillance UWB (100) selon la revendication 1, dans lequel l'étape consistant à combiner les signaux de capteurs détectés comprend une étape consistant à ajouter les signaux de capteurs détectés en utilisant les seconds décalages temporels dépendant du capteur.

3. Système de surveillance UWB (100) selon l'une quelconque des revendications précédentes, dans lequel l'étape consistant à combiner les signaux de capteurs détectés comprend une étape consistant à ajuster les seconds décalages temporels dépendant du capteur jusqu'à ce que les seconds décalages temporels dépendant du capteur compensent respectivement les premiers décalages temporels, dans lequel l'ajustement des seconds décalages temporels dépendant du capteur individuels est mis en oeuvre par exemple successivement signal de capteur par signal de capteur.

4. Système de surveillance UWB (100) selon l'une quelconque des revendications précédentes, dans lequel l'étape consistant à combiner les signaux de capteurs détectés est réalisée successivement signal de capteur par signal de capteur en se basant sur une combinaison de deux premiers signaux de capteurs de la pluralité de signaux de capteurs, et/ou

dans lequel les seconds décalages temporels dépendant du capteur pour les signaux de capteurs individuels sont choisis en fonction de la distance du capteur de localisation respectif à partir d'un point d'accès (104) à la zone d'espace (102) dans la plage de signaux UWB des capteurs de localisation, et/ou
dans lequel les seconds décalages temporels dépendant du capteur pour les signaux de capteurs individuels sont choisis en fonction d'une distance du capteur de localisation respectif à partir d'un accès (108) à une section spatiale prédéfinie de la zone d'espace (102) au sein de la plage de signaux UWB des capteurs de localisation et/ou

dans lequel les signaux de capteurs détectés comprennent un ou plusieurs seconds signaux UWB utiles, qui sont encodés conformément au second schéma d'encodage de données UWB (154) connu du système de surveillance (100), dans lequel l'étape consistant à détecter la présence du jeton UWB (112) inconnu comprend en outre l'étape consistant à :
filtrer le second signal UWB utile des signaux de capteurs détectés.

5. Système de surveillance UWB (100) selon l'une quelconque des revendications précédentes, dans lequel l'étape consistant à détecter la présence du jeton UWB (112) inconnu comprend en outre l'étape consistant à :
déterminer le premier schéma d'encodage de données UWB (152) inconnu du système de surveillance UWB (100) en utilisant le premier signal UWB utile détecté amplifié.

6. Système de surveillance UWB (100) selon la revendication 5, dans lequel le système de surveillance UWB (100) est configuré pour exécuter une première communication UWB avec le jeton UWB (112), qui est encodé conformément au premier schéma d'encodage de données UWB (152) déterminé.

7. Système de surveillance UWB (100) selon la revendication 6, dans lequel le système de surveillance UWB (100) est en outre configuré :

• pour recevoir une preuve d'autorisation du jeton UWB (112) afin d'accéder à et/ou entrer dans la zone d'espace (102),
• pour valider la preuve d'autorisation reçue,

dans lequel le système de surveillance UWB (100) est en outre configuré par exemple,

• après avoir validé avec succès la preuve d'autorisation, pour envoyer l'un des seconds schémas d'encodage de données UWB (154) connus du système de surveillance UWB (100) au jeton UWB (112) en utilisant la première communication UWB,
• réaliser une seconde communication UWB avec le jeton UWB (112) qui est encodé conformément au second schéma d'encodage de données UWB (154) envoyé au jeton UWB.

8. Système de surveillance UWB (100) selon l'une quelconque des revendications précédentes, dans lequel les premier et second schémas d'encodage de données UWB (152, 154) utilisent une ou plusieurs des méthodes d'encodage suivantes : modulation de position d'impulsion, modulation de polarité d'impulsion, modulation d'amplitude d'impulsion, modulation de forme d'impulsion orthogonale.

9. Système de surveillance UWB (100) selon l'une quelconque des revendications précédentes, dans lequel la pluralité de capteurs UWB (110) comprend, en plus des capteurs de localisation un ou plusieurs capteurs UWB supplémentaires, qui sont configurés pour acquérir des données de capteurs,
dans lequel le ou les capteurs UWB supplémentaires comprennent des capteurs (122) destinés à détecter par exemple des données de capteurs optiques, acoustiques, chimiques, thermiques, électromagnétiques et/ou basées sur des vibrations.

10. Système de surveillance UWB (100) selon l'une quelconque des revendications précédente, dans lequel les données de capteurs détectées comprennent des données de capteurs personnels et le système de surveillance UWB (100) est configuré pour

    • détecter des données de capteurs dans la zone d'espace (102) en utilisant les capteurs UWB, dans lequel les données de capteurs détectées comprennent des données de capteurs personnels,
    • filtrer les données de capteurs détectées en utilisant un filtre d'anonymisation (123), dans lequel le filtre d'anonymisation est configuré pour anonymiser les données de capteurs personnels,
    • évaluer les données de capteurs détectées destinées à détecter un événement exceptionnel,
    • lors de la détection de l'événement exceptionnel, suspendre temporairement l'anonymisation des données de capteurs personnels.

11. Système de surveillance UWB (100) selon la revendication 10, dans lequel l'événement exceptionnel est une détection réussie de la présence du jeton UWB (112) inconnu ou

    dans lequel l'événement exceptionnel est un échec d'une preuve d'autorisation valide du jeton UWB (112) inconnu détecté ou
    dans lequel l'événement exceptionnel est un échec de la seconde communication UWB avec le jeton UWB (112).

12. Système de surveillance UWB (100) selon l'une quelconque des revendications 10 à 11, dans lequel l'anonymisation par le filtre d'anonymisation (123) comprend une étape consistant à supprimer au moins une partie des données de capteurs personnels, dans lequel la suspension limitée dans le temps de l'anonymisation comprend une étape consistant à stocker les données de capteurs personnels détectées au sein d'une fenêtre de temps limitée.

13. Système de surveillance UWB (100) selon la revendication 12, dans lequel la fenêtre de temps limitée commence par la détection de l'événement exceptionnel et se termine par l'expiration d'une période de temps prédéterminé ou une fin de la détection de l'événement exceptionnel et/ou
dans lequel la suppression des données de capteurs personnels est mise en oeuvre par le capteur UWB qui détecte les données de capteurs personnels à supprimer, dans lequel le stockage des données de capteurs personnels comprend une étape consistant à transmettre les données de capteurs personnels par le capteur UWB détectant les données de capteurs personnels à stocker au moyen d'UWB dans un module de stockage du système de surveillance UWB (100).

14. Système de surveillance UWB (100) selon l'une quelconque des revendications 10 à 13, dans lequel l'anonymisation par le filtre d'anonymisation (123) comprend une étape consistant à chiffrer au moins une partie des données de capteurs personnels, dans lequel la suspension limitée dans le temps de l'anonymisation comprend une fourniture limitée dans le temps des données de capteurs personnels correspondantes sous forme non chiffrée et/ou
dans lequel le système de surveillance UWB (100) est en outre configuré :

    • pour recevoir une requête afin de partager les données de capteurs détectées,
    • pour vérifier une preuve d'autorisation, incluse dans la requête, afin d'accéder aux données de capteurs requises,
    • en cas de vérification réussie de la preuve d'autorisation, accorder l'accès aux données de capteurs requises.

15. Méthode de commande d'un système de surveillance UWB (100) destiné à surveiller une zone d'espace (102), dans laquelle le système de surveillance UWB (100) comprend une pluralité de capteurs UWB (110), qui sont agencés de manière distribuée dans la zone d'espace (102), dans laquelle les capteurs UWB (110) sont configurés pour une communication au moyen d'UWB,

    dans laquelle la pluralité de capteurs UWB (110) comprend une pluralité de capteurs de localisation destinés à déterminer des données de position de jetons UWB (112) portables mobiles à l'intérieur de la zone d'espace (102), dans laquelle l'étape consistant à déterminer les données de position comprend des mesures de temps de vol de signaux UWB (107) entre les capteurs de localisation et les jetons UWB (112), dans laquelle le système de surveillance UWB (100) est configuré pour détecter une présence d'un jeton UWB (112) inconnu dans la zone d'espace (102), dans laquelle le jeton UWB (112) inconnu envoie un premier signal UWB utile, dans laquelle le premier signal UWB utile envoyé est encodé conformément à un premier schéma d'encodage de données UWB (152) inconnu du système de surveillance (100),
dans laquelle la méthode de détection la présence du jeton UWB (112) inconnu comprend les étapes consistant à :

    • détecter une pluralité de signaux de capteurs par le biais de la pluralité spatialement distribuée de capteurs de localisation, dans laquelle les signaux de capteurs détectés comprennent respectivement un signal de bruit et un premier signal UWB utile envoyé par le jeton UWB (112) inconnu auquel le signal de bruit est superposé, dans laquelle le signal utile, du fait de la distribution spatiale des capteurs de localisation, apparaît avec un premier décalage temporel dépendant du capteur dans les signaux détectés par les capteurs de localisation individuels,
    • amplifier le premier signal UWB utile par rapport au signal de bruit, dans laquelle l'amplification comprend l'étape consistant à combiner les signaux de capteurs détectés les uns aux autres, dans laquelle les signaux de capteurs détectés sont décalés dans le temps pour une combinaison utilisant respectivement un second décalage temporel dépendant du capteur,
dans laquelle les seconds décalages temporels utilisés des signaux de capteurs détectés sont chacun inversés par rapport au premier décalage temporel du signal de capteur correspondant et compensent le premier décalage temporel correspondant,
    • détecter le premier signal UWB utile amplifié en utilisant les signaux de capteurs combinés.

Fig. 1

Fig. 2

400

Fig. 3A

404

Fig. 3B

Fig. 4A

Fig. 4B

Fig. 5

| Erfassen von Sensorsignalen | 500 |
|---|---|

| Kombinieren der erfassten Sensorsignale | 502 |
|---|---|

| Detektieren eines verstärkten UWB-Nutzsignals | 504 |
|---|---|

## Fig. 6

| Bestimmen unbekanntes UWB-Datenkodierungsschema | 510 |
|---|---|

| Verwenden unbekanntes UWB-Datenkodierungsschema | 512 |
|---|---|

| Empfangen Berechtigungsnachweis | 514 |
|---|---|

| Validieren Berechtigungsnachweis | 516 |
|---|---|

| Senden bekanntes UWB-Datenkodierungsschema | 518 |
|---|---|

| Verwenden bekanntes UWB-Datenkodierungsschema | 520 |
|---|---|

## Fig. 7

Fig. 8

110

| UWB-Sensor | |
|---|---|
| Prozessor | 120 |
| Sensorelement | 122 |
| Filter | 123 |
| Speicher | 124 |
| UWB-Antenne | 126 |

Fig. 9

| Erfassen Sensordaten | 200 |
|---|---|

↓

| Filtern Sensordaten | 202 |
|---|---|

↓

| Auswerten Sensordaten | 204 |
|---|---|

↓

| Aussetzen Anonymisieren | 206 |
|---|---|

Fig. 10

| Empfangen Anfrage | 300 |
| Prüfen Berechtigungsnachweis | 302 |
| Freigeben Zugriff | 304 |

Fig. 11

**IN DER BESCHREIBUNG AUFGEFÜHRTE DOKUMENTE**

**In der Beschreibung aufgeführte Patentdokumente**

- WO 2014009981 A1
- US 2006291537 A1
- US 2016349362 A1
- US 2014277837 A1
- WO 2013166096 A1
- EP 3471068 A1